# EUROPEAN PATENT APPLICATION

(11) **EP 0 823 815 A2**
(43) Date of publication of application: **11.02.1998**
(21) Application number: 97113651.0
(22) Date of filing: 07.08.1997
(51) Int. Cl.: H04N 5/445

(54) **Information receiving apparatus**

(30) Priority: 08.08.1996 JP 210299/96
(71) Applicant: MATSUSHITA ELECTRIC INDUSTRIAL CO., LTD., Kadoma-shi, Osaka 571 (JP)
(72) Inventor: Inoue, Hideki, Takatsuki-shi, Osaka 569 (JP); Sakaguchi, Etsuyoshi, Ibaraki-shi, Osaka 567 (JP); Henmi, Hidemi, Otsu-shi, Shiga, 520-21 (JP)
(74) Representative: Kügele, Bernhard

(57) **Abstract**

In an information receiving apparatus for storing service information in memory means, selecting the time information, service information storage time information, count information, service of using service information, price information for using service information, service information update attribute information, and others added to the service information in the input and output control unit, processing them appropriately, and presenting the contents of the service information in electronic program guide, merchandise catalog information, user survey, and others, the stored service information is deleted depending on specified condition determined by the sender or receiver of the service information, so that the user of service information may be facilitated, while the memory capacity of the memory means may be kept small.

## Description

### Field of the Invention

The present invention relates to an information receiving apparatus for receiving service information transmitted from a sender together with additional information.

### Background of the Invention

As transmission of much information is realized by digital broadcasting, programs are presented in multiple channels, which gives rise to necessity of an electronic program guide. The program information of general electronic program guide is always transmitted, like the teletext, from the broadcasting station as being inserted in the vertical fly-back period of television broadcast. The receiver receives the program information, stores it in the memory device, and, when all information about programs for a specific period is received, displays it in the display device as a program list. In such electronic program guide, a cursor is displayed on the program list, and by moving the cursor by manipulating, for example, a remote control device to give a command to a specific cell showing a program name on the program list, various functions can be executed. For example, when recording a certain program in a VTR, the cell of the program on the program list is specified, and execution of record reservation is commanded, so that the program can be automatically recorded in the VTR (see Japanese Patent 6-504165).

Thus, the electronic program guide is applicable to multiple functions of the multi-channel receiver and effective for enhancing the controllability of the receiver.

Besides, by the progress in communication technology such as Internet, much information is stored, and it has been demanded to reduce the size and increase the capacity of the memory device.

In the conventional receiving apparatus for receiving such electronic program guide, the information sent out from the transmission side is stored in the memory device, and after receiving a program list for a specific period, when the information repeatedly sent out from the transmission side is received, the previously stored portion of the program information in the memory device is updated and stored. Therefore, the information in the electronic program guide is always stored and updated regardless of the will of the viewer.

Thus, in the conventional receiving apparatus for receiving the conventional electronic program guide, the information in the electronic program guide is always stored and updated regardless of the will of the viewer, and the will of the data user is not reflected in filing of information, and the memory medium may be occupied by the information lowered in the value of use, and the memory medium cannot be utilized effectively, and since the information lowered in the value of use is left over in the memory medium, this information lowered in the value of use is displayed when the data user utilizes the information, and it is annoying and the convenience of the information is impaired.

The invention is devised to solve such problems, and it is hence an object thereof to present an apparatus and method of receiving information capable of automatically and appropriately deleting the information stored in the memory medium of the information receiving apparatus, utilizing the memory medium effectively, and enhancing the convenience of use of the information by the data user.

### Summary of the Invention

To solve the problems, the information receiving apparatus of claim 1 of the invention relates to an information receiving apparatus for receiving service information sent from a sender side together with at least time information as additional information, comprising memory means for storing the received service information, time information reading means for reading the time information from the service information stored in the memory means, comparator means for comparing the time information being read out by the time information reading means and set time information kept in the receiving apparatus, and information processing means for processing part or all of the service information corresponding to the time information, on the basis of result of comparison by the comparator means.

The information receiving apparatus of claim 2 of the invention relates to an information receiving apparatus for receiving service information sent from a sender side together with additional information, comprising memory means for storing the received service information, time information adding means for adding time information to the service information as additional information, time information reading means for reading the time information from the service information stored in the memory means, comparator means for comparing the time information being read out by the time information reading means and set time information kept in the receiving apparatus, and information processing means for processing part or all of the service information corresponding to the time information, on the basis of result of comparison by the comparator means.

The information receiving apparatus of claim 3 of the invention relates to an information receiving apparatus of claim 2, wherein the time information adding means adds the time when storing the received service information in the memory means as additional information.

The information receiving apparatus of claim 4 of the invention relates to an information receiving apparatus of claim 2, wherein the time information adding means stores the time when reading out the service information stored in the memory means in the memory means as additional information.

The information receiving apparatus of claim 5 of the invention relates to an information receiving apparatus of claim 2, wherein the time information adding means stores the time when first reading out the service information stored in the memory means in the memory means as additional information.

The information receiving apparatus of claim 6 of the invention relates to an information receiving apparatus for receiving service information sent from a sender side together with additional information, comprising memory means for storing the received service information, time information adding means for adding time information to the service information as additional information, a reference time holding unit for holding reference time information showing a valid term for specific service information, time information reading means for reading the time information of the specific service information from the service information stored in the memory means, comparator means for judging if the time indicated by set time information kept in the receiving apparatus has passed or not the valid term held by the reference time holding unit from the time indicated by the time information, and information processing means for processing part or all of the service information corresponding to the time information, on the basis of result of comparison by the comparator means.

The information receiving apparatus of claim 7 of the invention relates to an information receiving apparatus of claim 6, wherein the reference time information held in the reference time holding unit is transmitted from the sender as additional information of the specific service information as being added to the specific service information.

The information receiving apparatus of claim 8 of the invention relates to an information receiving apparatus of any one of claims 1 to 7, wherein the set time information is the present time determined by the clock.

The information receiving apparatus of claim 9 of the invention relates to an information receiving apparatus of any one of claims 1 to 7, wherein the set time information is entered by the data user.

The information receiving apparatus of claim 10 of the invention relates to an information receiving apparatus of any one of claims 1 to 7, wherein the set time information is entered from the sender of the service information through broadcast or telephone line.

The information receiving apparatus of claim 11 of the invention relates to an information receiving apparatus for receiving service information sent from a sender side together with at least information showing the data size added to the service information as additional information, comprising memory means for storing the received service information, data size comparator means for reading out the information about the data size of the plural pieces of service information from the service information stored in the memory means, and mutually comparing the data size added to the plural pieces of service information, and information processing means for processing part or all of the service information by selecting any service information from the plural pieces of service information, on the basis of result of comparison by the data size comparator means.

The information receiving apparatus of claim 12 of the invention relates to an information receiving apparatus for receiving service information sent from a sender side together with at least information showing the data size added to the service information as additional information, comprising memory means for storing the received service information, data size comparator means for reading out the information about the data size from the service information stored in the memory means, and comparing the data size being read out with specific reference data size, and information processing means for processing part or all of the service information, on the basis of result of comparison by the data size comparator means.

The information receiving apparatus of claim 13 of the invention relates to an information receiving apparatus for receiving service information sent from a sender side together with additional information, comprising memory means for storing the received service information, re-storing count information adding means for adding and storing the count information of re-storing actions of the service information in the memory means after reading the service information from the memory means, as additional information in the memory means when re-storing the corresponding service information, re-storing count information reading means for reading the re-storing count information from the service information stored in the memory means, comparator means for comparing the re-storing count information being read out by the re-storing count information reading means with predetermined set count information, and information processing means for processing part or all of the service information corresponding to the re-storing count information, on the basis of result of comparison by the comparator means.

The information receiving apparatus of claim 14 of the invention relates to an information receiving apparatus for receiving service information sent from a sender side together with additional information, comprising memory means for storing the received service information, reading count information adding means for adding and storing the count information of reading actions of the service information from the memory means, as additional information in the memory means to the corresponding service information, reading count information reading means for reading the reading count information from the service information stored in the memory means, comparator means for comparing the reading count information being read out by the reading count information reading means with predetermined set count information, and information processing means for processing part or all of the service information corresponding to the reading count information, on the basis of result of comparison by the comparator means.

The information receiving apparatus of claim 15 of the invention relates to an information receiving apparatus for receiving service information sent from a sender side together with at least price information of the information as additional information, comprising memory means for storing the received service information, price comparator means for reading out the price information of the plural pieces of service information from the service information stored in the memory means, and mutually comparing the prices of the plural pieces of information, and information processing means for processing part or all of the service information selected from the plural pieces of service information, on the basis of result of comparison by the price comparator means.

The information receiving apparatus of claim 16 of the invention relates to an information receiving apparatus for receiving service information sent from a sender side together with at least price information of the information as additional information, comprising memory means for storing the received service information, price comparator means for reading out the price information from the service information stored in the memory means, and comparing it with a specific reference price, and information processing means for processing part or all of the service information, on the basis of result of comparison by the price comparator means.

The information receiving apparatus of claim 17 of the invention relates to an information receiving apparatus for receiving service information sent from a sender side together with update attribute information including at least data name and flag showing presence or absence of update, as additional information, comprising memory means for storing the received service information, and information processing means for storing only the received service information in the memory means when the service information in the same data name as the service information subject to update attribute information of the received service information is not stored in the memory means, storing the received service information in the memory means when the service information in the same data name as the service information subject to update attribute information of the received service information is stored in the memory means, and the flag showing presence or absence of update of the update attribute information of the corresponding received service information shows presence of update, and deleting the service information in the same data name as the service information subject to update attribute information of the received service information of the service information stored in the memory means.

The information receiving apparatus of claim 18 of the invention relates to an information receiving apparatus for receiving service information sent from a sender side together data name and with point information including at least, data usable points, accumulated points of used data points, and using point table, as additional information, comprising memory means for storing the received service information, and information processing means for adding points determined in the using point table to the accumulated points of used data points when using the data of the service information stored in the memory means, and processing part or all of the corresponding service information when the accumulated points of used data points have reached the data usable points.

The information receiving apparatus of claim 19 of the invention relates to an information receiving apparatus for receiving service information sent from a sender side together with data name and point information including at least, data usable points, accumulated points of used data points, and using point table, as additional information, comprising memory means for storing the received service information, and information processing means for subtracting points determined in the using point table from the data usable points when using the data of the service information stored in the memory means, and processing part or all of the corresponding service information when the data usable points have become zero.

The information receiving apparatus of claim 20 of the invention relates to an information receiving apparatus for receiving service information sent from a sender side together with data name and point information including at least using point table, as additional information, comprising memory means for storing the received service information, data usable point holding unit for holding data usable points, and information processing means for subtracting points determined in the using point table from the data usable points held in the data usable point holding unit when using the data of the service information stored in the memory means, and processing part or all of the service information to which the point information is added when the data usable points have become zero.

The information receiving apparatus of claim 21 of the invention relates to an information receiving apparatus for receiving service information sent from a sender side together with data name and point information including at least using point table, as additional information, comprising memory means for storing the received service information, data usable point holding unit for holding data usable points, data using result holding unit for holding the accumulated points of used data points, and information processing means for adding points determined in the using point table to the accumulated points of used data points held in the accumulated points of used data point holding unit when using the data of the service information stored in the memory means, and processing part or all of the service information to which the point information is added when the accumulated points of used data points have reached the data usable points held in the data usable point holding unit.

The information receiving apparatus of claim 22 of the invention relates to an information receiving apparatus for receiving service information sent from a sender side together with at least information classification information showing whether the information is main information or subsidiary information, as additional information, comprising memory means for storing the received service information, and information processing means for receiving first service information to which information classification information showing that the information is subsidiary information is added, storing it in the memory means, and processing the information in part or all of the first service information stored in the memory means when receiving second service information to which information classification information showing that the information is main information relating to the first service information.

The information receiving apparatus of claim 23 of the invention relates to an information receiving apparatus for receiving service information sent from a sender side together with data name and link information including at least related information designation column for entering the information for specifying other related service information at the information receiving apparatus side, as additional information, comprising memory means for storing the received service information, means for entering the information for specifying other related service information in the related information designation column, and service information processing means for processing same as in the pertinent service information, on other service information indicated by the link information of the same service information, out of other service information stored in the memory means, when the service information stored in the memory means is processed.

The information receiving apparatus of claim 24 of the invention relates to an information receiving apparatus for receiving service information sent from a sender side together with at least link information showing other related service information as additional information, comprising memory means for storing the received service information, and service information processing means for processing same as in the pertinent service information, on other service information indicated by the link information of the same service information, out of other service information stored in the memory means, when the service information stored in the memory means is processed.

The information receiving apparatus of claim 25 of the invention relates to an information receiving apparatus for receiving service information sent from a sender side together with at least information processing condition information as additional information, comprising memory means for storing the received service information, and information processing means for processing part or all of the service information, when the receiving apparatus side operates by satisfying the condition specified in the information processing condition information on the service information stored in the memory means.

The information receiving apparatus of claim 26 of the invention relates to an information receiving apparatus for receiving service information sent from a sender side together with additional information, comprising memory means for storing the received service information, and information processing means for reading out the service information from the memory means, and processing part or all of the service information, when a specified action preset in the information receiving apparatus is done relating to this service information.

The information receiving apparatus of claim 27 of the invention relates to an information receiving apparatus for receiving service information sent from a sender side together with processing setting information including at least the data name, and processing designation column showing the object being excuted specified processing when specified information processing instruction is entered in the information receiving apparatus, as additional information, comprising memory means for storing the received service information, and information processing means for processing as specified on the service information as the object of processing described in the information processing instruction data out of the service information stored in the memory means, when the specified information processing instruction designated by the processing setting information is entered in the information receiving apparatus.

### Brief Description of the Drawings

Fig. 1 is a diagram showing a structure of an information receiving apparatus in embodiment 1 of the invention.

Fig. 2 is a diagram showing a detailed structure of an input and output control unit 16 of the information receiving apparatus in embodiment 1 or 2 of the invention.

Fig. 3 is a diagram showing a detailed structure of the input and output control unit 16 of the information receiving apparatus in a first or second modified example of embodiment 1 of the invention.

Fig. 4 is a diagram showing a structure of an information receiving apparatus in embodiment 2 or 3 of the invention.

Fig. 5 is a diagram showing a detailed structure of an input and output control unit 16 of an information receiving apparatus in embodiment 3 of the invention.

Fig. 6 is a diagram showing a structure of an information receiving apparatus in embodiment 4 of the invention.

Fig. 7 is a diagram showing a detailed structure of an input and output control unit 16 of the information receiving apparatus in a basic form of embodiment 4 of the invention.

Fig. 8 is a diagram showing a detailed structure of an input and output control unit 16 of the information receiving apparatus in a modified example of embodiment 4 of the invention.

Fig. 9 is a diagram showing a structure of an information receiving apparatus in embodiment 5 of the invention.

Fig. 10 is a diagram showing a detailed structure of an input and output control unit 16 of the information receiving apparatus in embodiment 5 of the invention.

Fig. 11 is a diagram showing a structure of an information receiving apparatus in embodiment 6 of the invention.

Fig. 12 is a diagram showing a detailed structure of an input and output control unit 16 of the information receiving apparatus in a first example of embodiment 6 of the invention.

Fig. 13 is a diagram showing a detailed structure of an input and output control unit 16 of the information receiving apparatus in a second example of embodiment 6 of the invention.

Fig. 14 is a diagram showing a structure of an information receiving apparatus in embodiment 7 of the invention.

Fig. 15 is a diagram showing a detailed structure of an input and output control unit 16 of the information receiving apparatus in embodiment 7 of the invention.

Fig. 16 is a diagram showing a structure of an information receiving apparatus in embodiment 8 of the invention.

Fig. 17 is a diagram showing a detailed structure of an input and output control unit 16 of the information receiving apparatus in embodiment 8 of the invention.

Fig. 18 is a diagram showing a structure of an information receiving apparatus in embodiment 9 of the invention.

Fig. 19 is a diagram showing a detailed structure of an input and output control unit 16 of the information receiving apparatus in embodiment 9 of the invention.

Fig. 20 is a diagram showing a structure of an information receiving apparatus in embodiment 10 of the invention.

Fig. 21 is a diagram showing a detailed structure of an input and output control unit 16 of the information receiving apparatus in embodiment 10 of the invention.

Fig. 22 is a diagram showing a structure of an information receiving apparatus in embodiment 11 of the invention.

Fig. 23 is a diagram showing a detailed structure of an input and output control unit 16 of the information receiving apparatus in embodiment 11 of the invention.

Fig. 24 is a diagram showing a structure of an information receiving apparatus in embodiment 12 of the invention.

Fig. 25 is a diagram showing a detailed structure of an input and output control unit 16 of the information receiving apparatus in embodiment 12 of the invention.

Fig. 26-a is a flowchart showing one action relating to reception of service information in the information receiving apparatus in embodiment 1, 2, 4 or 5 of the invention.

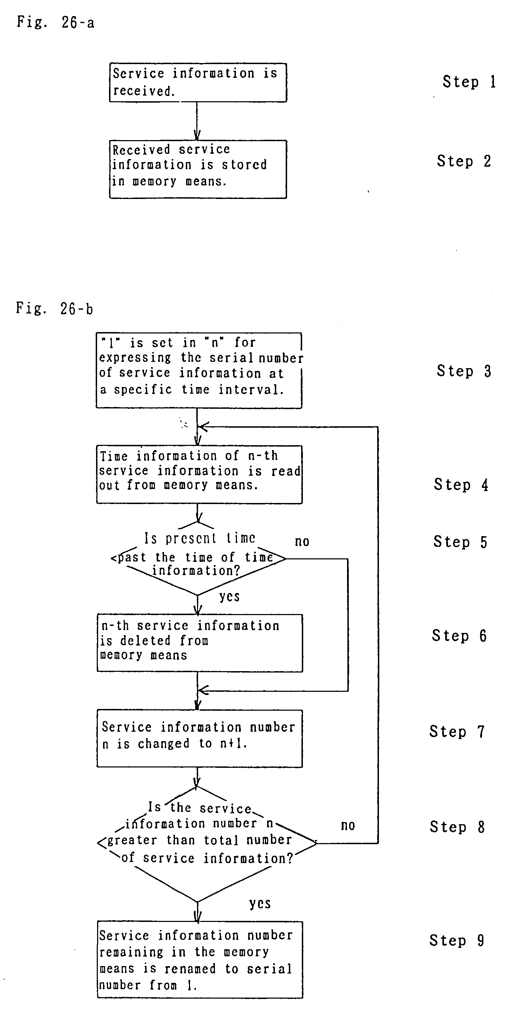

Fig. 26-b is a flowchart showing one action relating to processing of service information in the information receiving apparatus in embodiment 1 or 2 of the invention.

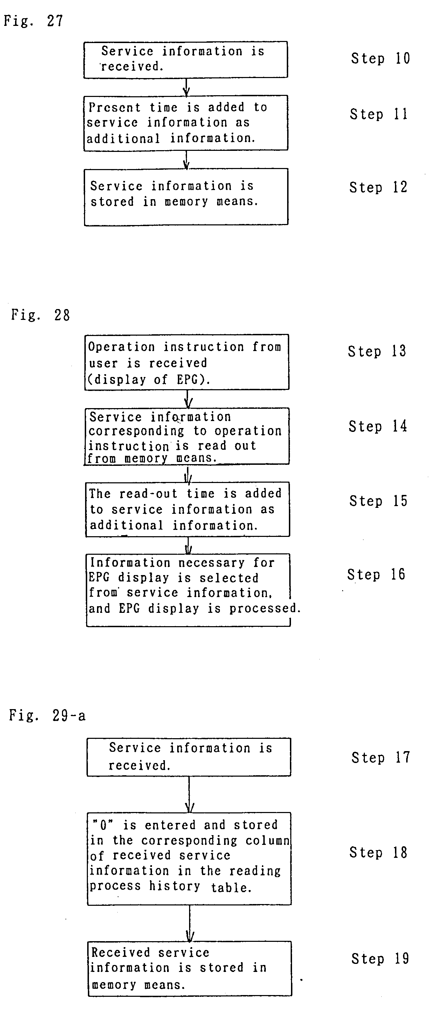

Fig. 27 is a flowchart showing one action relating to reception of service information in the information receiving apparatus in embodiment 2 or 3 of the invention.

Fig. 28 is a flowchart showing one action relating to processing of service information in the information receiving apparatus in embodiment 2 of the invention.

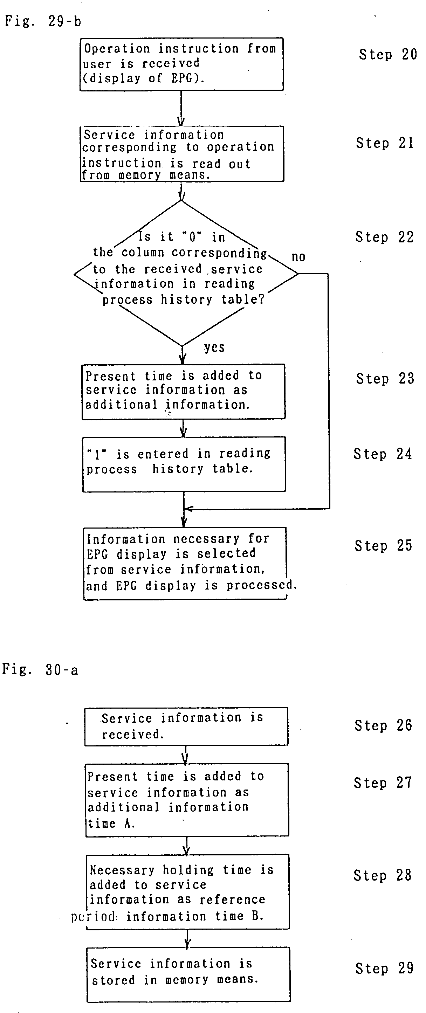

Fig. 29-a is a flowchart showing one action relating to reception of service information in the information receiving apparatus in embodiment 2 of the invention.

Fig. 29-b is a flowchart showing one action relating to processing of service information in the information receiving apparatus in embodiment 2 of the invention.

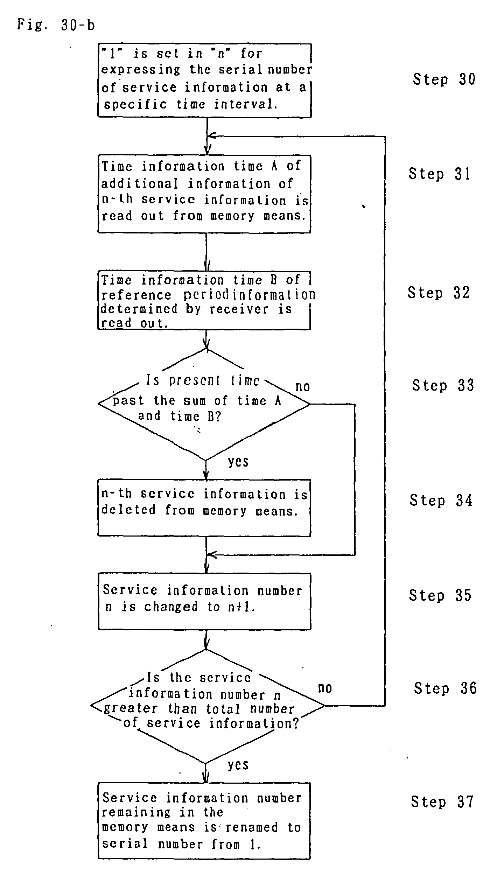

Fig. 30-a is a flowchart showing one action relating to reception of service information in the information receiving apparatus in a basic form of embodiment 3 of the invention.

Fig. 30-b is a flowchart showing one action relating to processing of service information in the information receiving apparatus in a basic form of embodiment 3 of the invention.

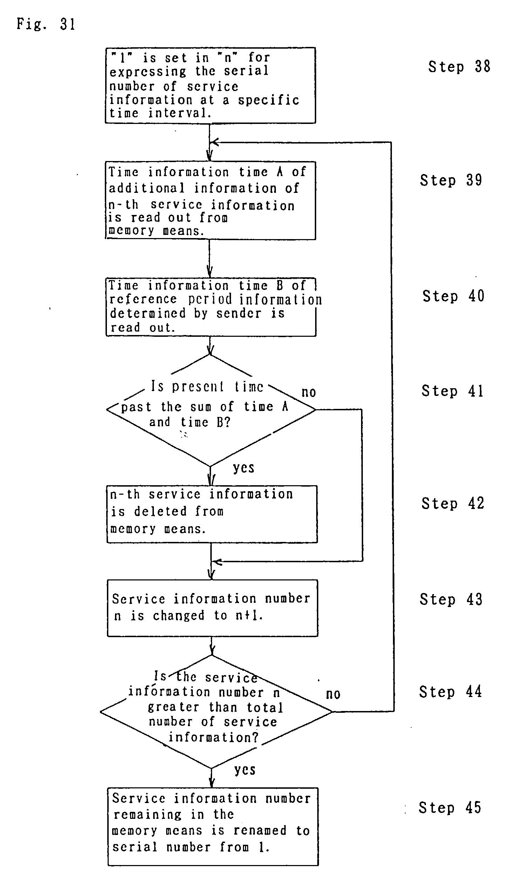

Fig. 31 is a flowchart showing one action relating to processing of service information in the information receiving apparatus in a modified example of embodiment 3 of the invention.

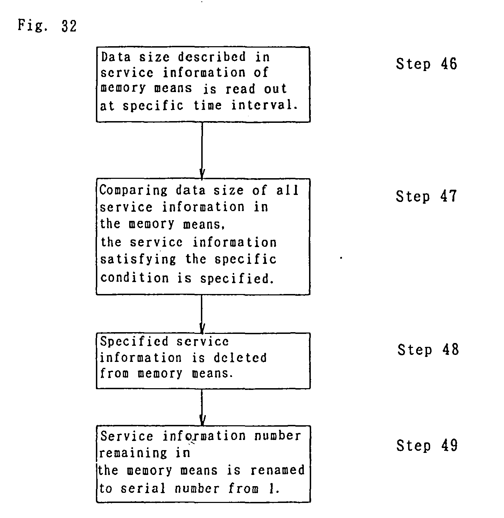

Fig. 32 is a flowchart showing one action relating to processing of service information in the information receiving apparatus in a basic form of embodiment 4 of the invention.

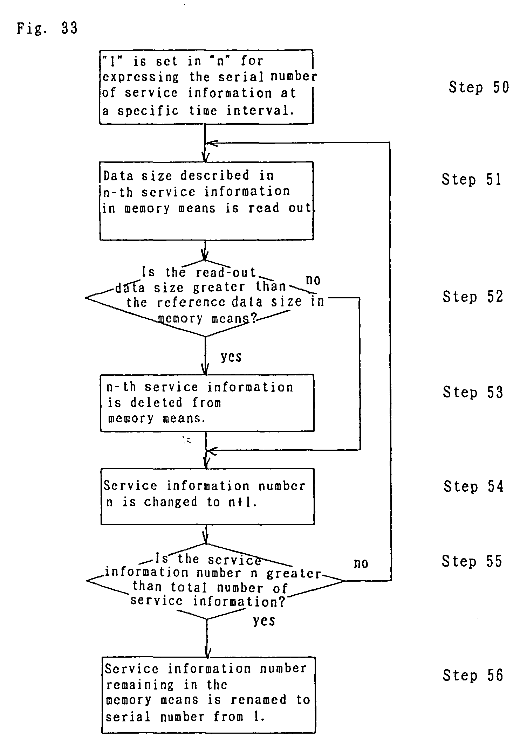

Fig. 33 is a flowchart showing one action relating to processing of service information in the information receiving apparatus in a modified example of embodiment 4 of the invention.

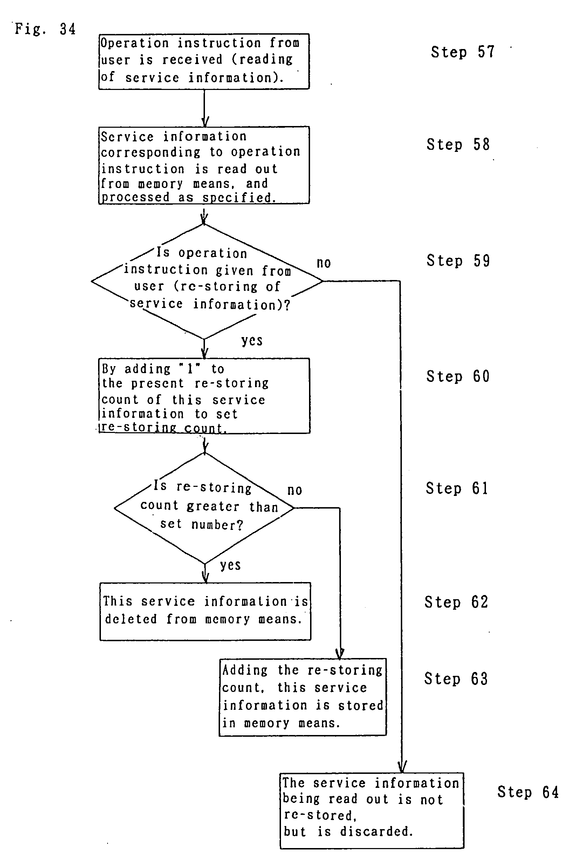

Fig. 34 is a flowchart showing one action relating to processing of service information in the information receiving apparatus in a first example of embodiment 5 of the invention.

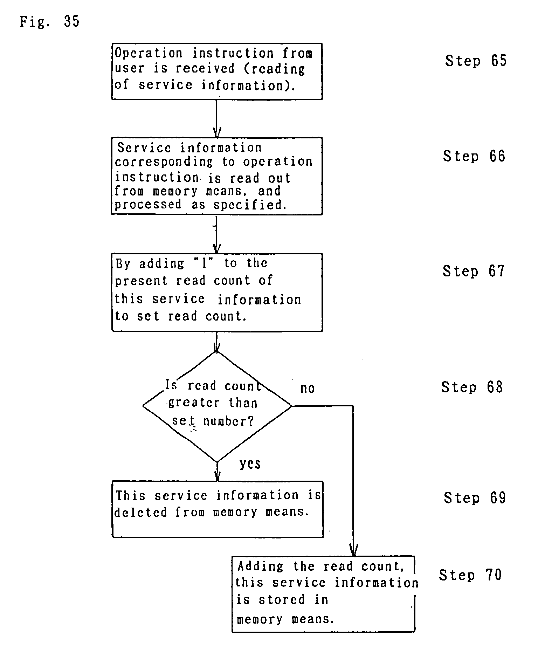

Fig. 35 is a flowchart showing one action relating to processing of service information in the information receiving apparatus in a second example of embodiment 5 of the invention.

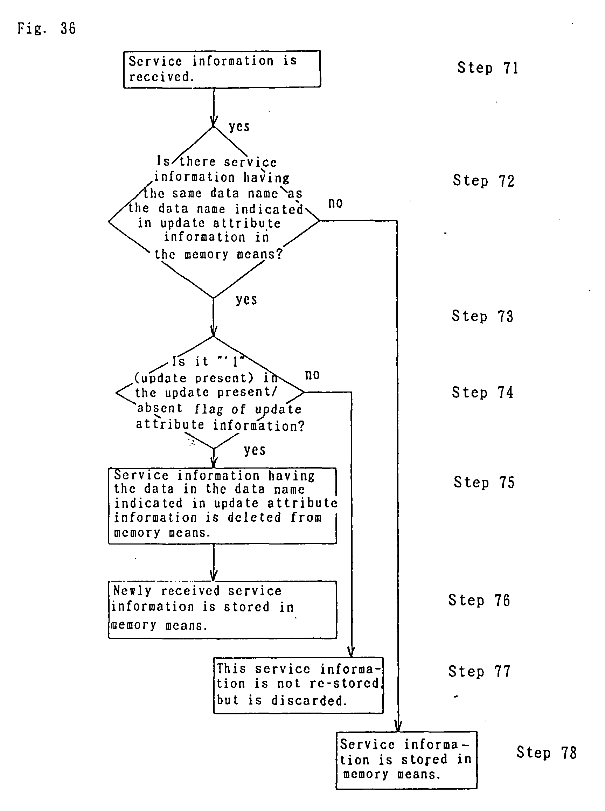

Fig. 36 is a flowchart showing action of the information receiving apparatus in embodiment 7 of the invention.

### Preferred Exemplary Embodiments

First is described the structure of the service information used commonly in all embodiments.
The service information is composed of contents and additional information. The contents include, for example, a program composed of picture, sound, and/or data, summary of program, weather forecast, event information, merchandise information, and others as required. The additional information is composed of data name for identifying the entire service information, and, if necessary, time information, update attribute information, link information, point information, and others, and each of such additional information is composed of each additional information name and necessary information.

Exemplary embodiments are described below.

### Embodiment 1

The information receiving apparatus according to embodiment 1 of the invention is to determine the processing of service information on the basis of the result of comparison between the time information transmitted together with the service information, and the time information in the information receiving apparatus, and it is divided into three types depending on the difference of time information in the information receiving apparatus. Each type is described below while referring to Fig. 1 and Fig. 2, and Fig. 1 and Fig. 3.

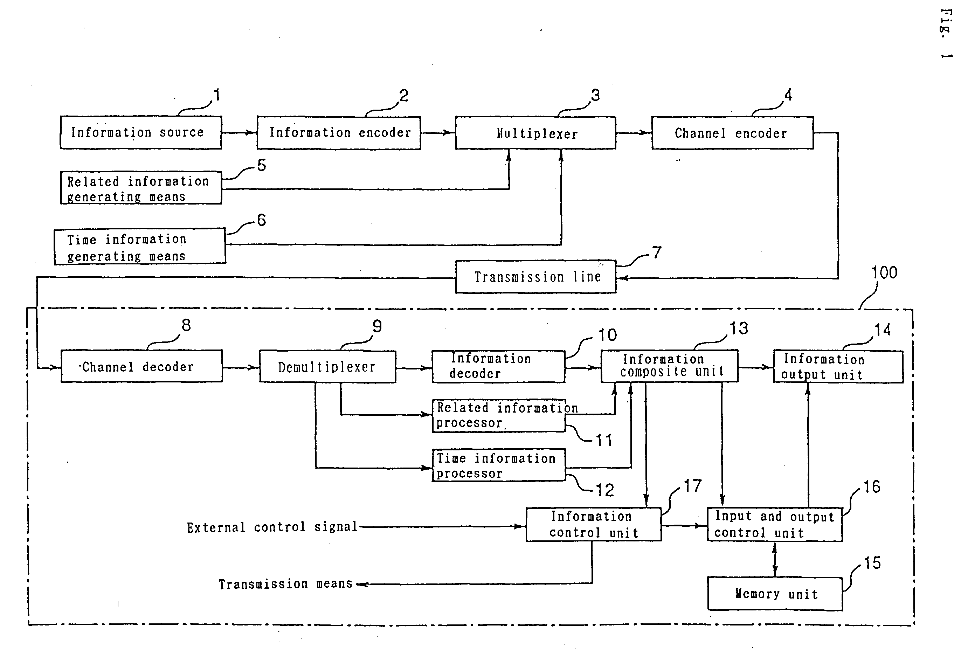

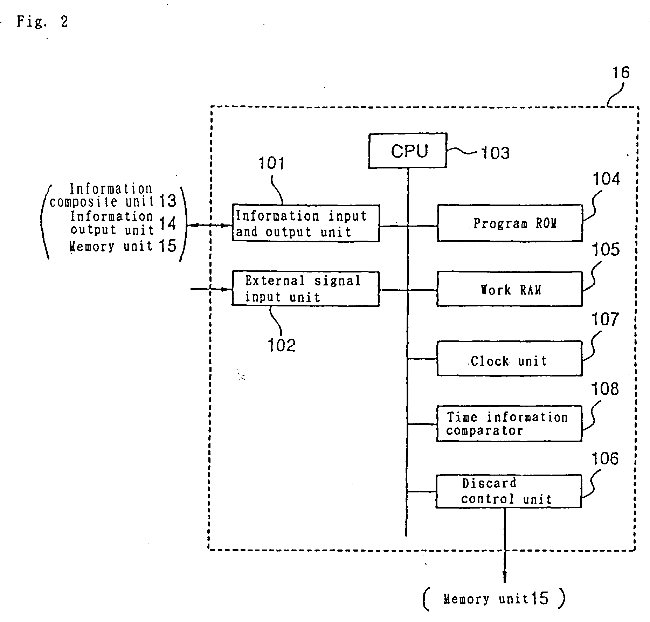

First, referring to Fig. 1 and Fig. 2, a basic example of embodiment 1 of the invention is described below.

Fig. 1 is a diagram showing a structure of the information receiving apparatus in the first embodiment of the invention, in which reference numeral 1 is an information source for issuing information composed of a video signal composed of still picture or moving picture, an audio signal, and character signal. An information encoder 2 is means for encoding the signal issued from the information source 1 according to an information encoding method specified, for example, in MPEG. Related information generating means 5 is means for generating information necessary for determining the information issued from the information source 1 (for example, related genre of the information, quantity of information, and link information for linking related information). Time information generating means 6 is generating means of time information relating to the information issued from the information source 1, and, for example, it is generating means of time information showing the start time of a program in the case of program information, or the limits of sales period of sales by mail order in the case of merchandise information about sales by mail order. Such related information and time information are fed into a multiplexer 3 and multiplexed into a signal encoded by the information encoder 2. In the multiplexer 3, in addition to multiplexing of related information and time information, the multiplexed information may be ciphered by scrambling in order to keep secrecy of the information. The output signal from the multiplexer 3 is put into a channel encoder 4, and is provided with an error correction code for protection against error in transmission line, and digital modulation is applied. Thus prepared information is transmitted from the sending station through satellite, ground wave, CATV cable, telephone line, or transmission line 7 of communication means.

In the information receiving apparatus, reference numeral 8 is a channel decoder composed of digital demodulating means for demodulating the received digital information and error correcting means for correcting error, and reference numeral 9 is a demultiplexer for demultiplexing the multiplexed digital data issued from the channel decoder 8 into encoded information, program related information, and time information. This multiplex separator 9, depending on its structure, can also descramble the ciphered information for secrecy. Reference numeral 10 is an information decoder for decoding the encoded information demultiplexed in the multiplex separator 9 into video signal, audio signal, character information or other signal, reference numeral 11 is a related information processor for feeding the related information demultiplexed in the demultiplexer 9, and reference numeral 12 is a time information processor for feeding the time information demultiplexed in the demultiplexer 9. Reference numeral 13 is an information composite unit for combining the information decoded in the information decoder 10, related information issued from the related information processor 11, and time information issued from the time information processor 12. Reference numeral 14 is an information output unit for sending out the information prepared (combined) in the information composite unit 13, for example, the video signal to the monitor, the audio signal to the speaker, and the data signal to the computer. Reference numeral 15 is a memory unit composed of a VCR, hard disk, other semiconductor memory like RAM, optical disk, or memory card. Reference numeral 16 is an input and output control unit for processing the information prepared (combined) in the information composite unit 13, storing into the memory unit 15, or reading out the information stored in the memory unit 15,and sending out into the information output unit. Reference numeral17 is an information control unit for receiving a control signal from outside, sending it out into the input and output control unit 16, or sending out the information prepared (combined) in the information composite unit 13 to outside by using communication means or the like.

Fig. 2 is a diagram showing a detailed structure of the input and output control unit 16. In the diagram, reference numeral101 is an information input and output unit for exchanging information between the information composite unit 13, information output unit 14 or memory unit 15, and the input and output control unit 16. Reference numeral 103 is a CPU for controlling the information through the input and output control unit 16. Reference numeral 104 is a program ROM in which a program for controlling the parts connected to the CPU 103 is stored, and 105 is a work RAM for temporarily storing the information when the CPU 103 calculates and controls the information. Reference numeral 107 is a clock unit for counting the present time. Reference numeral 108 is a time information comparator for comparing the time information of the service information entered through the information input and output unit 101, and the present time issued by the clock unit 107, or the set time entered through the external signal input unit 102. Reference numeral 106 is a discard control unit for issuing a command for discarding the service information to the memory unit 15, depending on the result of comparison in the time information comparator 108.

Relating to a basic example of embodiment 1, the operation of the information receiving apparatus is explained below.

First, at the information sender side, video signal composed of still picture or moving picture, audio signal, and data from the information source 1 are encoded in the information encoder 2 according to an information source encoding method specified, for example, in MPEG, and in the related information generating means 5, the information necessary for selecting the program, for example, related genre of the information content, the quantity of information (data size), or link information showing other information relating to that information is generated, and the signals issued from the information encoder 2 and related information generating means 5, and time information 6 are multiplexed in the multiplexer 3.This multiplexing is conducted in accordance with, for example, the system standard of MPEG, or the system standard of DVB which is the digital broadcast standard in Europe. The multiplexed digital signal is processed in the channel encoder 4 by using the error correction encoding means for processing data to protect from error in transmission line and digital modulating means for sending out digital signal, and is transmitted in the transmission line 7.

On the other hand, at the information receiving apparatus side, the signal transmitted through the transmission line 7 is processed by digital demodulation and error correction in the channel decoder 8. This channel decoder 8 processes reversely to the channel encoder 4, and issues same as the output signal of the multiplexer 3. The demultiplexer 9, contrary to the multiplexer 3, demultiplexes according to, for example, the MPEG system standard or DVB system standard, and the demultiplexed signal is issued to the information decoder 10, related information processor 11, and time information processor 12. The information issued to the information decoder 10 is decoded into video or audio signal according to, for example, the MPEG standard. The information composite unit 13 combines the information issued from the information decoder 10, related information processor 11, and time information processor 12, and issues to the information output unit 14, input and output control unit 16, and information control unit 17. The information issued to the information output unit 14 is sent out, for example, the video signal to the monitor, the audio signal to the speaker, and the data signal to the computer. The information issued to the input and output control unit 16 is stored in the memory unit 15. In this way, the service information having the service additional information including the related information and time information added to the information (contents) of picture and sound, being transmitted from the sender side and reproduced in the combined form in the information composite unit 13 of the information receiving apparatus 100 is stored in the memory unit 15 through the input and output control unit 16, and the data user can utilize the stored service information by issuing to the information output unit14 through the input and output control unit 16.

Specifically, the service information is described in the case of, for example, an electronic program guide for one week ahead including moving picture.

When an electronic program guide including moving picture is received as service information, the data user displays a program list prepared on the basis of this service information on a screen of a display device, not shown, through the information output unit 14, and utilizes in selection of a program. In the electronic program guide including moving picture, for example, when a cursor shown on the program list displayed on the screen is moved by a remote control operation to designate a specific program, and the moving picture about the program is shown on the screen. In such electronic program guide, each program is identified with information such as identifiers showing the broadcasting channel and program, and time information such as starting time and ending time of the program, and when the data user selects a program, reservation of recording is executed by using such additional information.

Herein, without making any processing on the service information stored in the memory unit 15, if the service information sent from the sender side is continuously stored cumulatively, much service information already useless is left over in the memory unit 15, and the problem indicated in the background of the invention occurs. That is, in this example of electronic program guide, programs already finished in broadcasting are displayed in the program list, and are bothering when selecting a program, and the program selection is made difficult. Besides, the majority of the memory capacity of the memory unit is occupied by the moving picture information of programs already finished in broadcasting, and the memory cannot be utilized effectively.

In the information receiving apparatus of embodiment 1, when the service information combined with the time information at the information sender side is received, this service information is stored in the memory unit 15 through the input and output control unit 16, and then the input and output control unit 16 operates as follows. That is, in every predetermined specific period, the time information of the service information stored in the memory unit 15 is taken in through the information input and output unit 101 by the control of the CPU 103, and this time information is compared with the present time counted by the clock unit 107 in the time information comparator 108, and the discard control unit 106, depending on the result of comparison by the time information comparator 108, issues a command for discarding the service information to the memory unit 15, as for the service information of which time information is past the present time. Receiving this information discard command, the memory unit 15 deletes part or all of the service information.

Herein, the input and output control unit 16, instead of performing the comparison processing action of the time information at every predetermined specific period as mentioned above, may receive new service information, and perform at every timing of storing it in the memory unit 15, or at every input of comparison processing command from outside by the data user.

Moreover, to delete the service information by the memory unit 15 by receiving a discard command from the discard control unit 106 means not only to eliminate the signal of the service information from the memory medium of the memory unit 15 physically, but also to disable reading of the signal of the service information, or disable reading of the signal of the service information from the memory medium in the control unit of the memory information on the memory medium, so that the data user may not see or hear it.

In this example of electronic program guide, the input and output control unit 16 reads out the time information added to each program information of the electronic program guide which is the service information stored in the memory unit 15, periodically or at a specific time, and compares it with the present time information counted by the clock unit 107, and when the present time is past the time information added to the program information, that is, when the program information is already past, the program information containing this time information is deleted from the memory unit 15.

As the deleting method, if physically removed from the memory medium, the state of occupation of the memory medium by the useless information can be canceled by this deletion, and new information can be stored in a vacant area after deletion of the information, so that the memory medium can be utilized effectively.

If the deleting method is to disable display on the display device, instead of removing from the memory medium physically, the data user avoids the bothering seeing or hearing of unnecessary program information on the screen.

In other practical example, it is described below when the service information is merchandise information.

For example, when the service information having the bargain period of the merchandise added as time information to the catalog information explaining the state and function of the merchandise is received, the information receiving apparatus in embodiment 1 operates as follows. That is, the input and output control unit 16 reads out the time information added to the merchandises information as the service information stored in the memory unit 15, periodically or at a specific time, compares it with the present time information counted by the clock unit 107, and when the present time is past the time information added to the merchandise information, that is, when the bargain period is already over, the merchandise information containing this information is deleted from the memory unit 15. Herein, as the method of deleting the merchandise information, all information of the merchandise to be deleted may be deleted, or all other information than the merchandise name information of the merchandise information may be deleted. Thus, when only the merchandise names are left over, a merchandise list can be compiled.

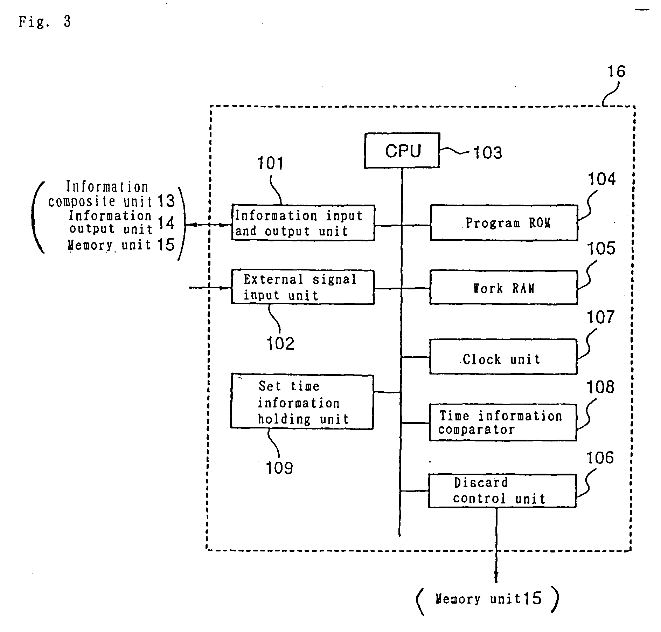

The information receiving apparatus in a first modified example of embodiment 1 is described below by referring to Fig. 1 and Fig. 3. However, Fig. 1 is exactly same as the basic example above except for the input and output control unit 16, and its explanation is omitted.

Fig. 3 is a diagram showing a structure of the input and output control unit 16 of the information receiving apparatus. In Fig. 3, reference numeral 109 is a set time information holding unit for holding the set time information entered from outside. In the explanation of the basic example of embodiment 1 above, the time information added to the service information is compared with the present time counted by the clock unit provided in the receiving apparatus, but in this first modified example, the time information added to the service information is compared with the set time information held in the set time information holding unit 109. Herein, as the set time information from outside, the data user set the time from outside, and this set time information is compared with the time information added to the service information.

As a second modified example of embodiment 1, moreover, instead of entering the set time information by the data user, the set time information sent by the sender of the information through broadcast, telephone line or the like is held in the set time information holding unit 109, and this set time information is compared with the time information added to the service information.

In such modified example, on the basis of any arbitrary time other than the present time, the service information containing the time information can be processed (deleted), so that the service information can be processed according to much free standard.

Thus, according to the information receiving apparatus of embodiment 1, in the information receiving apparatus for receiving the service information sent from the sender side containing at least the time information as additional information, after storing the received service information in the memory unit 15, the time information is read out from the service information stored in the memory unit 15, and this time information is compared with the set time information set in the receiving apparatus (for example, the present time or the time information set from outside) in the time information comparator 108, and part or all of the service information corresponding to the time information is processed according to the result of the comparison, and therefore the information stored in the memory medium of the information receiving apparatus can be deleted automatically and appropriately, and the memory medium can be utilized effectively, while the convenience of use of the information by the data user can be enhanced.

The above operation flow is shown in step 1 through step 9 in Fig. 26-a and Fig. 26-b.

### Embodiment 2

The information receiving apparatus in embodiment 2 of the invention is to add the time information to the received service information at the receiver side, compare the time information and the set time determined in the information receiving apparatus, and determine processing of the service information, and it is classified into three types depending on the difference of the time information.

In the information receiving apparatus in embodiment 1, as the additional information, the service information added and sent by the sender side is received in the information receiving apparatus, whereas it is a feature of the information receiving apparatus in embodiment 2 that the time information is added at the receiver side as the additional information of the service information.

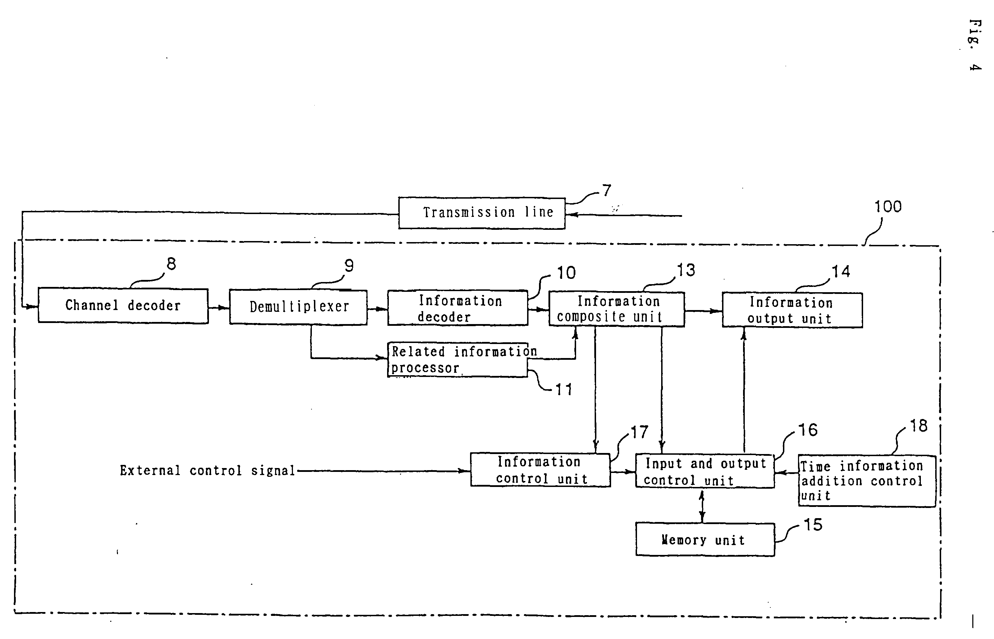

This information receiving apparatus is described below while referring to Fig. 4 and Fig. 2.

Fig. 4 is a diagram showing a structure of the information receiving apparatus of embodiment 2, and in Fig. 4, same reference numerals as in Fig. 1 represent same or corresponding parts, and reference numeral 18 denotes a time information addition control unit for controlling addition of the specified time described below as the time information to the service information when this service information is stored in the memory unit 15 through the input and output control unit 16.

Fig. 2 is a diagram showing a detailed structure of the input and output control unit 16. This structure is same as in embodiment 1, and its explanation is omitted.

In Fig. 4, the channel decoder 8 processes the signal sent through the transmission line 7 by digital demodulation and error correction. The demultiplexer 9 demultiplexes the signal issued from the channel decoder 8, and the demultiplexed signal is sent out into the information decoder 10 and related information processor 11. The information sent out into the information decoder10 is decoded into video or audio signal. The information composite unit13combines the information issued from the information decoder 10 and related information processor 11, and sends out into the information output unit 14 and input and output control unit 16. These actions are same as the actions of the corresponding parts of the information receiving apparatus in embodiment 1.

The information sent out into the input and output control unit 16 is stored in the memory unit 15. Herein, the input and output control unit 16 adds the present time counted by the clock unit 107 to the service information as the time information when storing the service information into the memory unit 15 by the control of the time information addition control unit 18, and the service information combined with the time information is stored in the memory unit 15. The service information thus transmitted from the sender side, reproduced in a combined form in the information composite unit 13 of the information receiving apparatus 100, and provided with related information (service additional information) to the information (contents) of picture and sound is combined with the time information in the input and output control unit 16, and is stored in the memory unit 15, so that the data user can utilize by issuing the stored service information to the information output unit 14 through the input and output control unit 16.

Below is explained the operation of processing (deleting) of service information in the information receiving apparatus in embodiment 2.

The input and output control unit 16 reads out the time information of the service information stored in the memory unit 15,that is, the time information added in the input and output control unit 16 when storing the service information into the memory unit 15,through the information input and output unit 101, by the control of the CPU 103, at every predetermined specific period or at specific time, and this time information is compared with the present time counted by the clock unit 107 in the time information comparator 108.The discard control unit 106 issues a command for deleting the service information to the memory unit 15, on the basis of the result of comparison by the time information comparator 108, if the present time is past the time indicated by the time information added to the service information. Receiving this information delete command, the memory unit 15 deletes part or all of the service information.

Herein, to delete the service information by the memory unit15 by receiving a discard command from the discard control unit 106 means, same as in embodiment 1, not only to eliminate the signal of the service information from the memory medium of the memory unit 15physically, but also to disable reading of the signal of the service information, or disable reading of the signal of the service information from the memory medium in the control unit of the memory information on the memory medium, so that the data user may not see or hear it.

As the specified time information, the time of storing the service information into the memory means in the receiving device may be also used. The flow of this operation is shown from steps 10to 12 in Fig. 27, and from steps 3 to 9 in Fig. 26-b.

As the specified time information, moreover, the time of reading out the service information from the memory means may be also used. The flow of this operation is shown from steps 10 to 12 in Fig. 27, from steps 13 to 16 in Fig. 28, and from steps 3 to 9 in Fig. 26-b.

Further, as the specified time information, the time of first reading out the service information from the memory means may be used. In this case, receiving the service information, when storing it in the memory means, 0 is entered in the corresponding column of the service information of the processing history table in the memory means. Afterwards, when first reading out this service information, that is, when the processing history table is 0, the read time is entered as the additional information of the service information, and, at the same time, 0 in the processing history table is changed to 1 and stored. The flow of this operation is shown from steps 17 to 19 in Fig. 29-a, from steps 20 to 25 in Fig. 29-b, and from steps 3 to 9 in Fig. 26-b.

### Embodiment 3

The information receiving apparatus of embodiment 3 of the invention is to compare the time of the sum of the time information added by the sender of the service information and the reference time mentioned below with the time set in the information receiving apparatus, and determine to execute the processing of the service information, and it is classified into two types depending on the difference in the reference time.

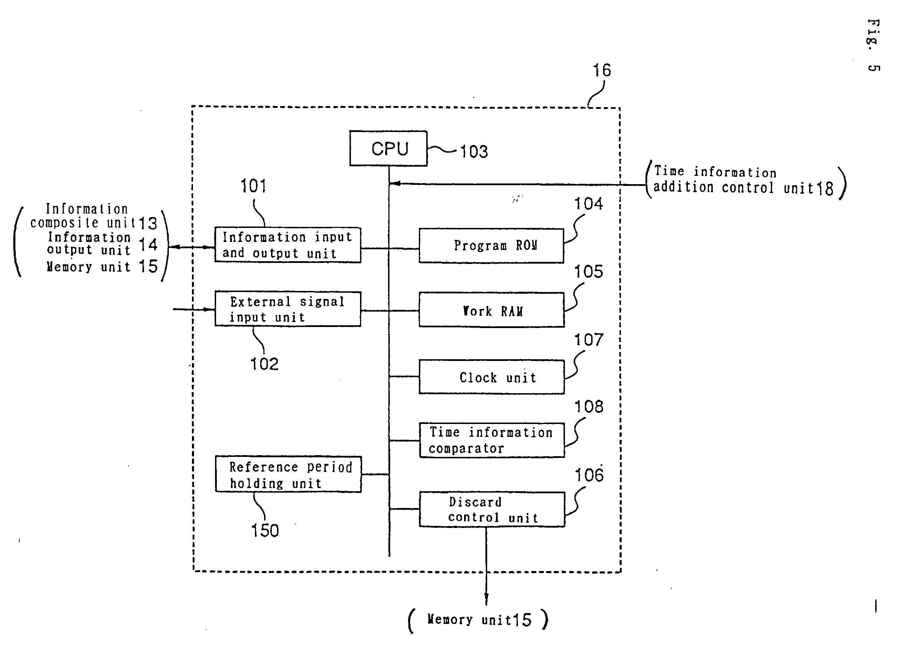

The information receiving apparatus in basic examples of embodiment 3 of the invention is described below by reference to Fig.4 and Fig. 5.

Fig. 4 is a diagram showing a structure of the information receiving apparatus in embodiment 3 of the invention, and it is same as the one used in embodiment 2. In Fig. 4, same reference numerals as in Fig. 1 represent same or corresponding parts, and reference numeral 18 denotes a time information addition control unit for controlling addition of the time when stored as the time information to the service information when this service information is stored in the memory unit 15 through the input and output control unit 16.

Fig. 5 is a diagram showing a detailed structure of the input and output control unit 16. In the diagram, same reference numerals as in Fig. 2 are same or corresponding parts. Reference numeral 150 is the reference time holding unit for holding the time (period) as the reference for comparison in the time information comparator 108.

The operation of the information receiving apparatus in embodiment 3 is described below.

The information receiving apparatus in embodiment 1 is to process (delete) the service information sent from the sender side of the service information together with the time information, whereas the information receiving apparatus of embodiment 3 is capable of processing (deleting) both the service information sent together with the time information from the sender side of the service information, and the service information sent without time information from the sender side of the service information.

First, the channel decoder 8 processes the signal sent through the transmission line 7 by digital demodulation and error correction. The multiplex separator 9 demultiplexes the signal issued from the channel decoder 8, and the demultiplexed signal is sent out into the information decoder 10 and related information processor 11. The information sent out into the information decoder10 is decoded into video or audio signal. The information composite unit 13 combines the information issued from the information decoder 10 and related information processor 11, and sends out into the information output unit 14 and input and output control unit 16. These actions are same as the actions of the corresponding parts of the information receiving apparatus in embodiment 1.

The information sent out into the input and output control unit 16 is stored in the memory unit 15. Herein, the input and output control unit 16 adds the present time counted by the clock unit 107 to the service information as the time information when storing the service information into the memory unit 15 by the control of the time information addition control unit 18, and the service information combined with the time information is stored in the memory unit 15. The service information thus transmitted from the sender side, reproduced in a composite form in the information composite unit 13 of the information receiving apparatus 100, and provided with related information (service additional information) to the information (contents) of picture and sound is combined with the time information in the input and output control unit 16, and is stored in the memory unit 15, so that the data user can utilize by issuing the stored service information to the information output unit 14 through the input and output control unit 16.

Below is explained the operation of processing (deleting) of service information in the information receiving apparatus in embodiment 3.

The input and output control unit 16 reads out the time information of the service information stored in the memory unit 15,that is, the time information added in the input and output control unit 16 when storing the service information into the memory unit 15,through the information input and output unit 101, by the control of the CPU 103, at every predetermined specific period or at specific time, and this time information is compared with the present time counted by the clock unit 107 in the time information comparator 108.The discard control unit 106 issues a command for deleting the service information to the memory unit 15, on the basis of the result of comparison by the time information comparator 108, if the present time is past the time indicated by the time information added to the service information by more than the specified time held in the reference time holding unit 150. Receiving this information delete command, the memory unit 15 deletes part or all of the service information.

Herein, to delete the service information by the memory unit15 by receiving a discard command from the discard control unit 106 means, same as in embodiment 1, not only to eliminate the signal of the service information from the memory medium of the memory unit 15physically, but also to disable reading of the signal of the service information, or disable reading of the signal of the service information from the memory medium in the control unit of the memory information on the memory medium, so that the data user may not see or hear it.

In the case that a data user sets the reference period, the data user enters a desired holding period (for example, 20 days) of the service information as the reference period in the memory unit through an input manipulation unit, not shown, and the input and output control unit 16 reads out this reference period through an external signal input unit 102, and stores it in the reference period holding unit 150. As a result, by the processing (deleting) action of the service information, the service information passing more than 20 days from the time being stored in the memory unit 15 is deleted, so that the memory medium can be utilized effectively.

The flow of this operation is shown from steps 26 to 37 in Fig. 30-a and Fig. 30-b.

The reference time holding in the reference period holding unit150 may be either entered by the data user or sent by the provider of service information.

In the information receiving apparatus according to a second modified example of embodiment 3, the holding period in the reference period holding unit 150 is sent by the provider of the service information. In this case, the provider of the service information sends the valid term of the service information by broadcast or telephone line or the like. The sending method by broadcast includes, aside from the method of sending by adding the valid term to the service information as service additional information, a method of broadcasting the information for specifying the corresponding service information and the data including its valid term separately from the service information. When sending by telephone line or the like, the data including the information specifying the service information and its valid term is transmitted. The input and output control unit 16 reads out this valid term information from the information composite unit 13 through the information input and output unit 101 or external signal input unit 102, and stores in the reference period holding unit 150. As a result, by the processing (deleting) action of the service information, the service information exceeding the valid term specified by the provider of the service information from the time being stored in the memory unit 15 is deleted, and the memory medium of the information receiving apparatus can be utilized effectively.

Of the above operation, the flow of the action for sending the reference time by the provider of the service information is shown from steps 10 to 12 in Fig. 27, and from steps 38 to 45 in Fig.31.

As a practical example of the provider of the service information sending the reference time, the merchandise information is described below as the service information.

When receiving the service information having the valid term (B) (for example, 31 days) of the information added as service additional information to the catalog information explaining the condition and function of the merchandise is received, the information receiving apparatus of embodiment 3 operates as follows. That is, the input and output control unit 16 reads out the time information(A) added when storing the service information into the memory unit 15, periodically or at a specific time, and compares the time of the sum of this time information (A) and the valid term (B) with the present time information (C) counted by the clock unit 107, and when A+B<C, or when passing the valid term set by the provider of the service information, this merchandise information is deleted from the memory unit 15. Herein, as the method of deleting the merchandise information, all information of the merchandise to be deleted may be deleted, or all other information than the merchandise name information of the merchandise information may be deleted. Thus, when only the merchandise names are left over, a merchandise list can be compiled.

In the above description of embodiment 3, when storing the service information in the memory unit 15, the present time is added to the service information as the time information, but, alternatively, thetime when using the service information stored in the memory unit 15 may be added to the service information as the time information, and in this case, therefore, when a specific time has passed since certain service information is used last time, this service information is deleted, so that the service information not used for a longtime can be effectively and automatically eliminated.

Moreover, the time using the service information stored in the memory unit 15 for the first time may be added to the service information as the time information, and in this case, therefore, when a specific time has passed since certain service information is used first time, this service information is deleted. In such structure, for example, when the sender of the information presents service information, such method of presenting service information can be realized that the data user can utilize this service information as many times as desired within a certain time after using this service information for the first time, but cannot use thereafter.

Thus, according to the information receiving apparatus of embodiment 3, in the information receiving apparatus for receiving the service information to which the additional information is added at the sender side, the memory unit 15 for storing the received service information is comprised, when storing the service information in the memory unit 15, or when reading out the service information stored in the memory unit 15, the time information is stored in the memory means as additional information, and the added time information is read out from the service information stored in the memory unit 15, and this time information and the set time information determined in the receiving apparatus (for example, the present time, or the time information set from outside) are compared in the time information comparator 108, and part or all of the service information corresponding to the time information is processed according to the result of comparison, and therefore the information stored in the memory medium of the information receiving apparatus can be automatically and appropriately deleted, and the memory medium can be utilized effectively, while the convenience of use of information by the data user can be enhanced.

### Embodiment 4

The information receiving apparatus according to embodiment 4 of the invention is intended to determine processing of service information depending on the data size added to the service information, and it is divided into two types depending on the difference in the method of comparison of data size. Each type is described below by reference to Figs. 6 and 7, and Figs. 6 and 8.

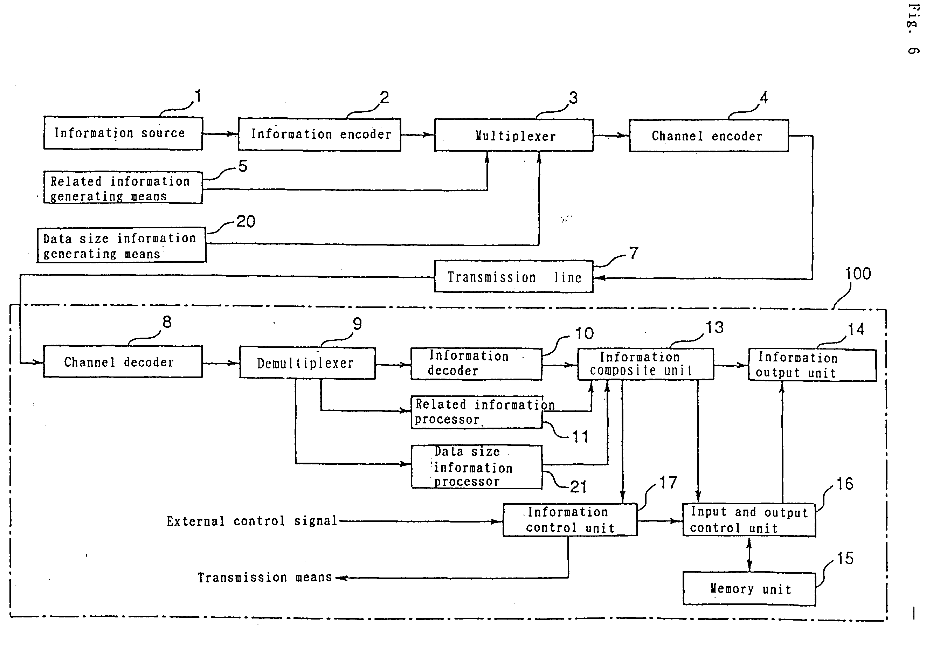

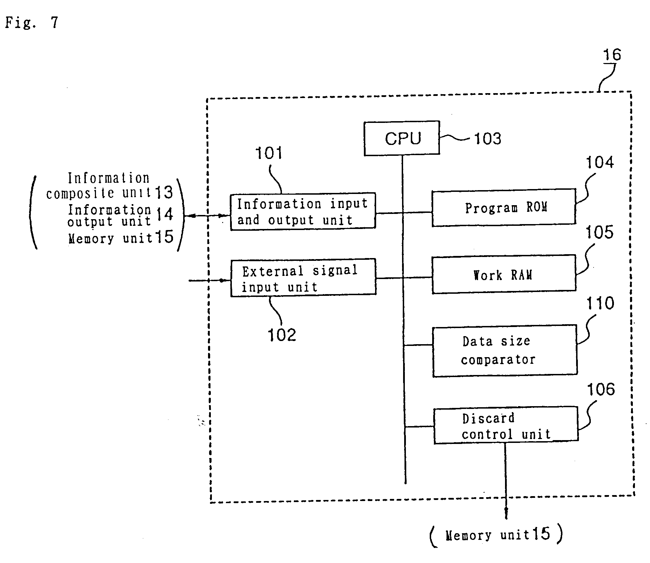

Referring first to Fig. 6 and Fig. 7, a basic example of embodiment 4 of the invention is described below.

Fig. 6 is a diagram showing a structure of the information receiving apparatus in embodiment 4 of the invention. In Fig. 6, same reference numerals as in Fig. 1 represent same or corresponding parts, and reference numeral 20 denotes data size information generating means for generating data size information to be added to the transmitted service information, and 21 is data size information processor for processing the data size information demultiplexed in the demultiplexer 9, and issuing to the information composite unit 13.

Fig. 7 is a diagram showing a detailed structure of the input and output control unit 16. In the diagram, same reference numerals as in Fig. 2 are same or corresponding parts. Reference numeral 110 is a data size comparator for comparing the data size added to plural pieces of service information stored in the memory unit 15.

The operation of the information receiving apparatus in the basic example of embodiment 4 is described below.

The information receiving apparatus of embodiment 4 is intended to process (delete) the service information sent from the sender side of the service information together with additional information of data size.

When sending the service information at the information sender side, by receiving the transmission signal adding the data size information showing the quantity of the service information through the transmission line 7, first, the channel decoder 8 demodulates the signal transmitted through the transmission line 7 and corrects transmitting error. The demultiplexer 9 demultiplexes the signal issued by the channel decoder 8, and the demultiplexed signal is sent out into the information decoder10, related information processor 11, and data size information processor 21. The information composite unit 13 combines the information issued from the information decoder 10, related information processor 11, and data size information processor 21, and sends out into the information output unit 14 and input and output control unit 16.The information sent into the input and output control unit 16 is stored in the memory unit 15. In this way, the service information transmitted from the sender side, reproduced in a composite from in the information composite unit 13 of the information receiving apparatus 100, and combined with the related information and data size information as service additional information to the information (contents) of picture and sound, is stored in the memory unit 15 through the input and output control unit 16, so that the data user can utilize the stored service information by outputting delivering to the information output unit 14 through the input and output control unit16.

Next is explained the operation of processing (deleting) of service information in the information receiving apparatus in the basic example of embodiment 4.

The input and output control unit 16 reads out the data size information of plural pieces of service information stored in the memory unit 15 through the information input and output unit 101, by the control of the CPU 103, at every predetermined specific period or at a specific time, compares the data size of the plural pieces of information being read out ,mutually, in the data size comparator 110, and, for the information of the greatest data size, outputs a command for deleting the service information to which this data size information has been added to the memory unit 15 from the discard control unit 106. Receiving this information delete command, the memory unit 15 deletes part or all of the service information. As a result, the one of the greatest data size out of the service information stored in the memory unit 15 is deleted periodically or when specified, and by repeating this action, the service information of relatively small data size is left over in the memory unit 15, so that more service information can be stored in the memory medium of same memory capacity. That is, the memory medium can be utilized effectively if the data user wishes to hold a greater number of service information.

In this explanation, comparing the data size information of plural pieces of information, the one of the greatest data size is deleted, but sequentially from the greatest data size, up to n (n being an integer of 2 or more) pieces may be deleted, and the same effect as in deleting the information of the greatest data size is obtained.

The flow of the action is shown in steps 1 and 2 in Fig. 26-a, and from steps 46 to 49 in Fig. 32.

Alternatively, the smallest data size, or up to n (n being an integer of 2 or more) pieces may be deleted from the smallest data size. In this case, by repeating the deleting process, service information of relatively large size is left over in the memory unit15, so that the service information of more abundant data can be presented. That is, the memory medium can be effectively utilized when the data user prefers the service information being a greater data size, not a number of pieces of service information.

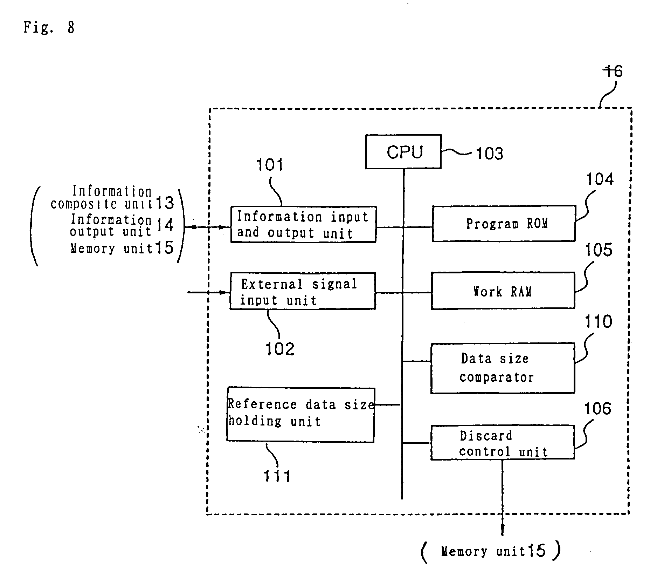

The information receiving apparatus in a modified example of embodiment 4 is described by reference to Figs. 6 and 8. However, Fig. 6 is exactly same as the basic example except for the input and output control unit 16, and the explanation is omitted.

Fig. 8 is a diagram showing a structure of the input and output control unit 16 of the information receiving apparatus, in which reference numeral 111 is a reference data size holding unit for holding reference data size information entered from outside. In the explanation of the basic example of embodiment 4, the data size information added to plural pieces of service information is mutually compared, but in this modified example, the data size information added to the service information is compared with the set data size information held in the reference data size holding unit 111. Herein, the set data size information from outside can be entered by the data user by an arbitrary value from an input manipulation device, not shown. The input and output control unit 16 reads out the data size information of the service information stored in the memory unit 15 through information input and output unit 101, by the control of the CPU 103, at every predetermined specific period or at a specific time, and compares it with the set data size information held in the set data size holding unit 111, and if having the data size greater than the set data size, a command for deleting the service information to which this data size information has been added, is output to the memory unit 15 through the discard control unit 106. Receiving this delete command, the memory unit 15 deletes part or all of the corresponding service information. As a result, only the service information having a smaller data size than the data size determined by the data user is held in the memory unit 15, and the memory medium can be utilized effectively when the data user wishes to hold as many pieces of service information as possible.

The flow of the action is shown in steps 1 and 2 in Fig. 26-a, and from steps 50 to 56 in Fig. 33.

In this explanation, the service information having greater data size than the set data size is deleted, but the service information having the smaller data size than the set data size may be deleted to the contrary, and in this case, the memory medium can be effectively utilized when the data user prefers the service information being a greater data size, not the number of pieces of service information.

Moreover, by holding the upper limit and lower limit of data size in the set data size holding unit 111, the service information above the upper limit of data size and service information below the lower limit may be deleted, and in this case, hence, the memory medium can be utilized effectively if the data user wishes to maintain the service information in a range of specified data size.

In this way, in the information receiving apparatus in embodiment 4, which is the information receiving apparatus for receiving the service information sent from the sender side together with the information showing ,at least, the data size of the service information as the additional information, after storing the received service information in the memory unit 15, the information about the data size of the plural pieces of service information is read out from the service information stored in the memory unit 15, and the data size of the plural pieces of service information is compared in the data size comparator 110 mutually, and on the basis of the result of the comparison, part or all of a certain service information out of plural pieces of the service information is processed, and therefore the information stored in the memory medium of the information receiving apparatus can be automatically and appropriately deleted, so that the memory medium can be utilized effectively, while the convenience of use of information by the data user can be enhanced.

In the information receiving apparatus in the modified example of embodiment 4, which is the information receiving apparatus for receiving the service information sent from the sender side together with the information showing , at least, the data size of the service information, at least, as the additional information, after storing the received service information in the memory unit 15, the information about the data size is read out from the service information stored in the memory unit 15, and it is compared with the set data size held in the set data size holding unit 111 in the data size comparator 110, and on the basis of the result of the comparison, part or all of the service information is processed, and therefore the information stored in the memory medium of the information receiving apparatus can be automatically and appropriately deleted, so that the memory medium can be utilized effectively, while the convenience of use of information by the data user can be enhanced.

### Embodiment 5

The information receiving apparatus in embodiment 5 of the invention is to determine processing of service information depend- ing on the number of times of using the received service information, and is classified into two types depending on the method of identifying the number of times of use.

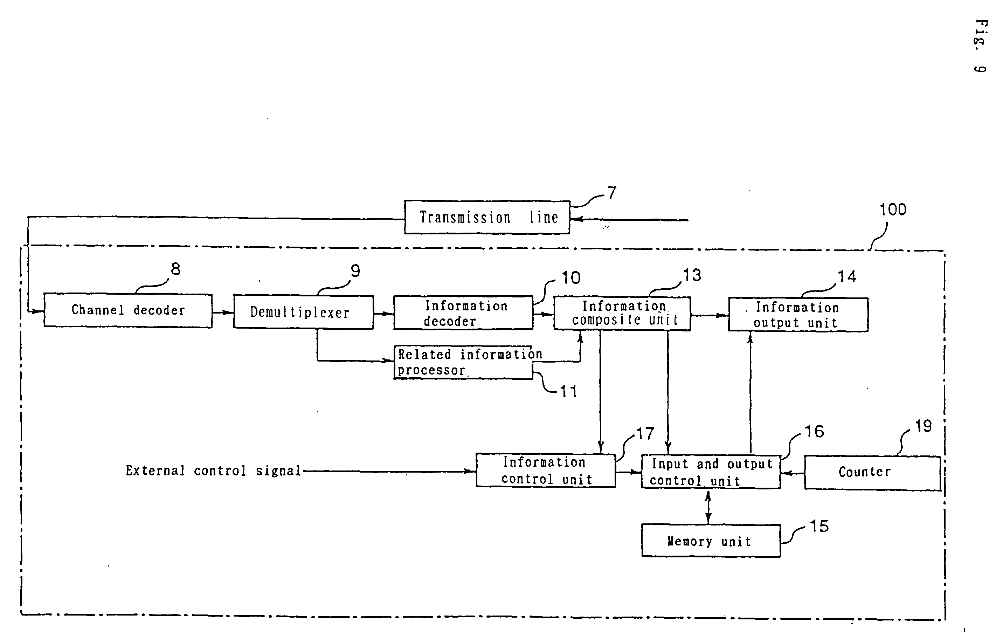

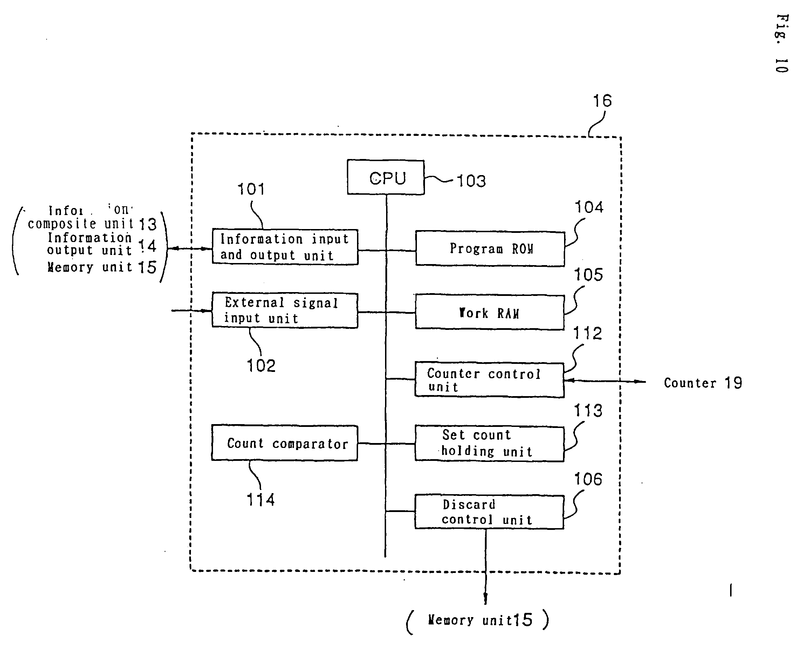

They are explained in Fig. 9 and Fig. 10.

Fig. 9 is a diagram showing a structure of the information receiving apparatus in embodiment 5 of the invention, and in Fig. 9, same reference numerals as in Fig. 1 are same or corresponding parts, and reference numeral 19 is a counter for counting the number of times of use of the service information stored in the memory unit 15.

Fig. 10 is a diagram showing a detailed structure of the input and output unit 16 of the information receiving apparatus in embodiment 5. In the diagram, same reference numerals as in Fig. 2 are same or corresponding parts. Reference numeral 112 is a counter control unit for controlling the counter 19, and reference numeral 113 is a set count holding unit for holding the set count entered from outside. Reference numeral 114 is a count comparator for comparing the using count information added to the service information and the set count held in the set count holding unit 113.

The operation of the information receiving apparatus in a first example of embodiment 5 is described below.

The information receiving apparatus in the first example of embodiment 5 is to read out the service information stored in the memory unit 15 from the memory means, utilize it, and process (delete) according to the number of times of storing it again in the memory unit 15.

When the transmission signal is received through the transmission line 7, first, the channel decoder 8 processes the signal transmitted through the transmission line 7 by digital demodulation and error correction. The demultiplexer 9 demultiplexes the signal issued from the channel decoder 8, and the demultiplexed signal is sent out into the information decoder 10 and related information processor 11. The information composite unit 13combines the information issued from the information decoder 10 and related information processor 11, and outputs composite form signal to the information output unit 14 and input and output control unit 16. The information sent into the input and output control unit 16 is stored in the memory unit 15. In this way, the service information which is transmitted from the sender side, reproduced in a composite from in the information composite unit 13 of the information receiving apparatus 100, and combined with the related information (service additional information) to the information (contents) of picture and sound, is stored in the memory unit 15 through the input and output control unit 16, so that the data user can utilize the stored service information by outputting to the information output unit 14 through the input and output control unit 16.

Next is explained the operation of processing (deleting) of service information in the information receiving apparatus in the first example of embodiment 5.

Every time the data user manipulates the operation input unit, not shown, and reads out and re-stores the service information in the memory unit 15, the counter control unit 112 in the input and output control unit 16 controls the counter 19, and counts the number of times of restoring the data. The count value (the re-storing count information) counted by the counter 19 is added to the service information stored in the memory unit 15 as additional information. On the other hand, the count comparator 114 reads out the re-storing count information added to the service information from the memory unit 15, and compares with the count held in the set count holding unit 113.

The discard control unit 106, if the re-storing count added to the service information exceeds the count held in the set count holding unit 113 on the basis of the result of comparison in the count comparator 114, issues a command to delete the service information to the memory unit 15. Receiving this information delete command, the memory unit 15 deletes part or all of the service information. As a result, the service information being re-stored by a specific number of times is deleted from the memory unit 15, so that the memory medium of the information receiving apparatus can be utilized effectively.

The flow of this action is shown in steps 1 and 2 in Fig. 26-a, and from steps 57 to 64 in Fig. 34.

The information receiving apparatus in a second example of embodiment 5 of the invention is described below. This information receiving apparatus is very similar to the first example, and only the difference is described.

In the description of the first example of embodiment 5, the service information is read out from the memory unit 15, and the re-storing count of storing again in the memory means is added to the service information, and the information receiving apparatus in the second example is to add the number of times of reading out the service information from the memory unit 15 to the service information. The read count can be stored in the counter 19 in Fig. 9.

The flow of this action is shown in steps 1 and 2 in Fig. 26-a, and from steps 65 to 70 in Fig. 35.

Herein, the set count held in the set count holding unit 113may be entered by the data user by operating an input operation unit, not shown, or the set count may be sent by the sender of the information, through broadcast or telephone line or the like, together with the information specifying the service information. The broadcast transmission method may include a method of transmitting the set count by adding to the service information as service additional information, and a method of broadcasting the data including the information for specifying the service information and the set count separately from the service information. The telephone line transmission method is to transmit the data including the information specifying the service information and the set count.

Thus, according to the information receiving apparatus of embodiment 5, in the information receiving apparatus for receiving the service information sent from the sender together with addition-al information, comprising the memory unit 15 for storing the received service information, by storing the number of times of reading out the service information from the memory unit 15, or the number of times of re-storing the service information being read out from the memory unit 15 into the memory unit 15 as additional information in the memory means, and reading out the added count information from the service information stored in the memory 15, this count information is compared with the set count information set in the receiving apparatus (the set count information set by the data user or from outside by the sender of the service information) in the count comparator 114, and the service information corresponding to the count information is processed in part or all depending on the result of comparison, and therefore the information stored in the memory medium of the information receiving apparatus can be automatically and adequately deleted, and the memory medium can be utilized effectively, and the convenience of use of information for the data use is enhanced.

In embodiment 5, the service information operates same as above regardless of the presence or absence of additional information added by the sender.

### Embodiment 6

The information receiving apparatus in embodiment 6 of the invention is to determine processing of service information by comparison of data using price of the service information, and is classified into two types depending on the difference in the method of comparison. They are explained below by referring to Figs. 11 and 12, and Figs. 11 and 13.

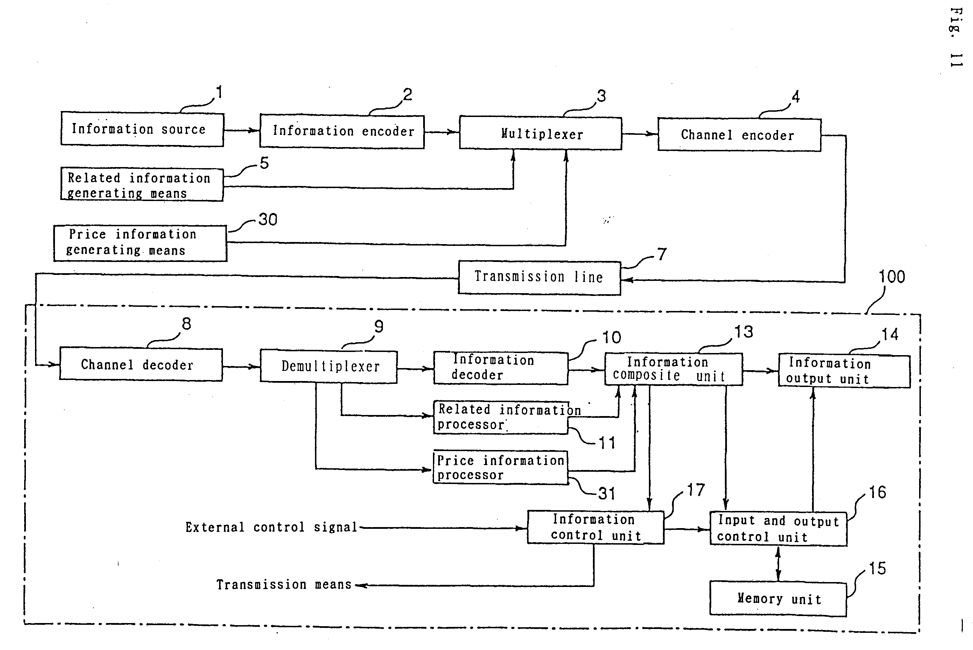

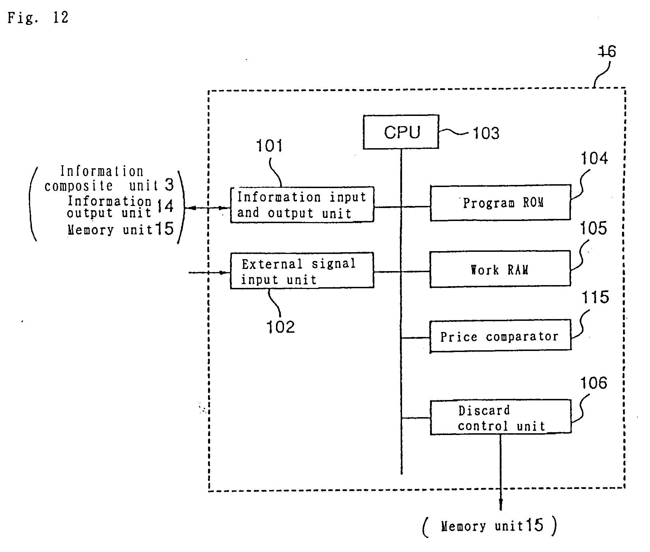

A first example of embodiment 6 of the invention is described first by reference to Figs. 11 and 12.

Fig. 11 is a diagram showing a structure of the information receiving apparatus in the first example of embodiment 6 of the invention, and in Fig. 11, same reference numerals as in Fig. 1 are same or corresponding parts, and reference numeral 30 is price information generating means for generating price information showing necessary charge for using the transmitted information, and reference numeral 31 is a price information processor for processing the price information demultiplexed in the demultiplexer 9 and outputting to the information composite unit 13.

Fig. 12 is a diagram showing a detailed structure of the input and output control unit 16 of the information receiving apparatus in the first example of embodiment 6 of the invention. In Fig. 12, same reference numerals as in Fig. 2 are same or corresponding parts. Reference numeral 115 is a price comparator for comparing the using prices of plural pieces of service information stored in the memory unit 15.

The information receiving apparatus in the first example of embodiment 6 is to process (delete) the service information transmitted from the sender side of the service information together with additional price information, according to the using price.

When sending the service information at the sender side of information, the transmission signal combined with the price information showing the using price of the service information is received through the transmission line 7, and then, first, the channel decoder 8 demodulates the signal transmitted through the transmission line 7 and corrects transmission error. The demultiplexer 9 demultiplexes the signal output to the channel decoder 8, and the demultiplexed signal is output to the information decoder 10, related information processor 11, and price information processor 31. The information composite unit 13 combines the information issued from the information decoder 10, related information processor 11, and price information processor 31,and outputs to the information output unit 14 and input and output control unit 16. The information outputs to the input and output control unit 16 is stored in the memory unit 15. In this way, the service information transmitted from the sender side, reproduced in a combined form in the information composite unit 13 of the information receiving apparatus 100, and combined with the related information and price information to the information (contents) of picture and sound as service additional information, is stored in the memory unit 15 through the input and output control unit 16, so that the data user can utilize the stored service information by outputting to the information output unit 14 through the input and output control unit 16.

Next is explained the operation of processing (deleting) of service information in the information receiving apparatus in the first example of embodiment 6.

The input and output control unit 16 reads out the price information of plural pieces of service information stored in the memory unit 15 through the information input and output unit 101, by the control of the CPU 103, at every predetermined specific period or at a specific time, compares the price of the plural pieces of information being read in the price comparator 115, and, for the information of the highest price, outputs a command for deleting the service information to which this price information has been added to the memory unit 15 from the discard control unit 106. Receiving this information delete command, the memory unit 15 deletes part or all of the service information. As a result, the one of the highest price out of the service information stored in the memory unit 15 is deleted periodically or when specified, and by repeating this action, the service information of relatively low price is left over in the memory unit 15, so that more service information can be stored in the memory medium of same memory capacity. Therefore, the memory medium can be utilized effectively if the data user wishes to hold service information of lower data using price.

In this explanation, comparing the price information of plural pieces of information, the one of the highest is deleted, but sequentially from the highest price, up to n (n being an integer of 2 or more) pieces may be deleted, and the same effect as in deleting the information of the highest price is obtained.

Alternatively, the lowest price, or up to n (n being an integer of 2 or more) pieces may be deleted from the lowest price. In this case, by repeating the deleting process, service information of relatively high price is left over in the memory unit 15, so that the service information of more expensive data is left over. That is, the memory medium can be effectively utilized when the data user prefers to hold data of expensive service.

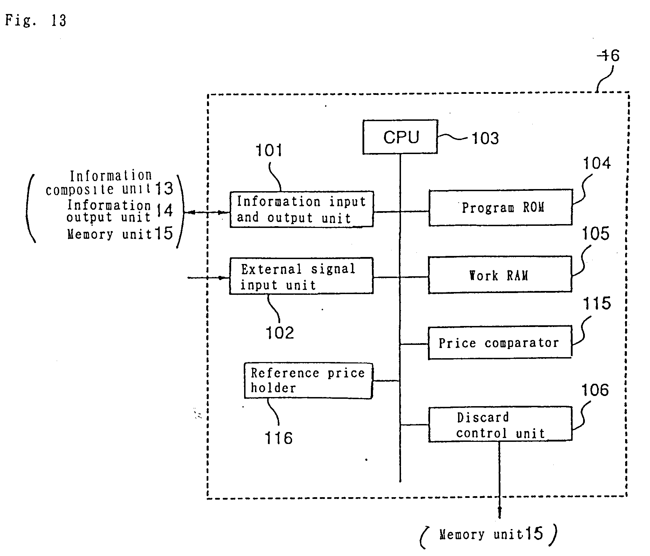

The information receiving apparatus in a second example of embodiment 6 is described by reference to Figs. 11 and 13. However, Fig. 11 is exactly same as the first example except for the input and output control unit 16, and the explanation is omitted.

Fig. 13 is a diagram showing a structure of the input and output control unit 16 of the information receiving apparatus in the second example of embodiment 6, in which reference numeral 116 is a reference price holding unit for holding reference price information entered from outside. In the above explanation of the first example of embodiment 6, the price information added to plural pieces of service information is mutually compared, but in this second example, the price information added to the service information is compared with the reference price information held in the reference price holding unit 116. Herein, the reference price information from outside can be entered by the data user by an arbitrary value from an input manipulation device, not shown. The input and output control unit 16 reads out the price information of the service information stored in the memory unit 15 through information input and output unit 101, by the control of the CPU 103, at every predetermined specific period or at a specific time, and compares it with the reference price information held in the reference price holding unit 116, and outputs, if having the price higher than the reference price, a command for deleting the service information to which this price information has been added, to the memory unit 15 through the discard control unit 106. Receiving this delete command, the memory unit 15 deletes part or all of the corresponding service information. As a result, only the service information having lower price than the price determined by the data user is held in the memory unit 15, and the memory medium can be utilized effectively when the data user wishes to hold the service information lower than the specific price, and also the data user can prevent from using service data of unexpectedly high data using price.

In the above explanation, the data using price higher than the reference price is deleted, but the data price lower than the reference price may be deleted to the contrary, and in this case, the memory medium can be effectively utilized when the data user prefers to hold the service information higher than a specific using price.

Moreover, by holding the upper limit and lower limit of price in the set price holding unit 116, the service information above the upper limit of data using price and service information below the lower limit may be deleted, and in this case, hence, the memory medium can be utilized effectively if the data user wishes to maintain the service information in a certain range of specified price.

In this way, in the information receiving apparatus in the first example of embodiment 6, which is the information receiving apparatus for receiving the service information sent from the sender side together with the price information showing ,at least, the data using price of the information, at least, as the additional information, after storing the received service information in the memory unit 15,the price information of the plural pieces of service information is read out from the service information stored in the memory unit 15, and the data using price of the plural pieces of service information is compared in the price comparator 115, and on the basis of the result of the comparison, part or all of a certain service information out of plural pieces of information is processed, and therefore the information stored in the memory medium of the information receiving apparatus can be automatically and appropriately deleted, so that the memory medium can be utilized effectively, while the convenience of use of information by the data user can be enhanced.

In the information receiving apparatus in the second example of embodiment 6, which is the information receiving apparatus for receiving the service information sent from the sender side together with the price information showing, at least, the data using price of the information, at least, as the additional information, after storing the received service information in the memory unit 15, the price information is read out from the service information stored in the memory unit 15, and it is compared with the reference price held in the reference price holding unit 116 in the price comparator 115, and on the basis of the result of the comparison, part or all of a certain service information is processed, and therefore the information stored in the memory medium of the information receiving apparatus can be automatically and appropriately deleted, so that the memory medium can be utilized effectively, while the convenience of use of information by the data user can be enhanced.

### Embodiment 7

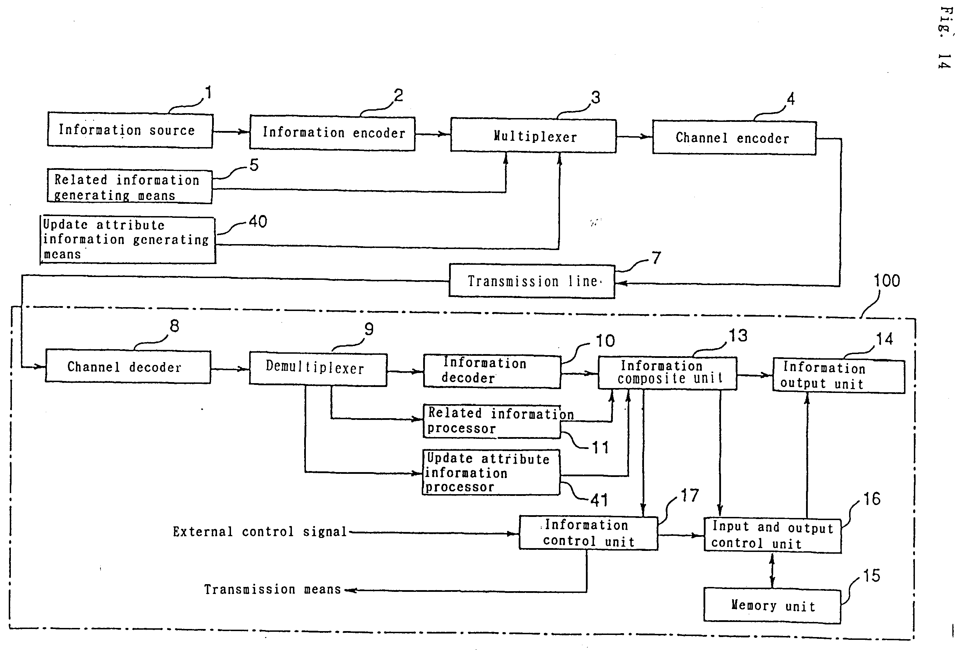

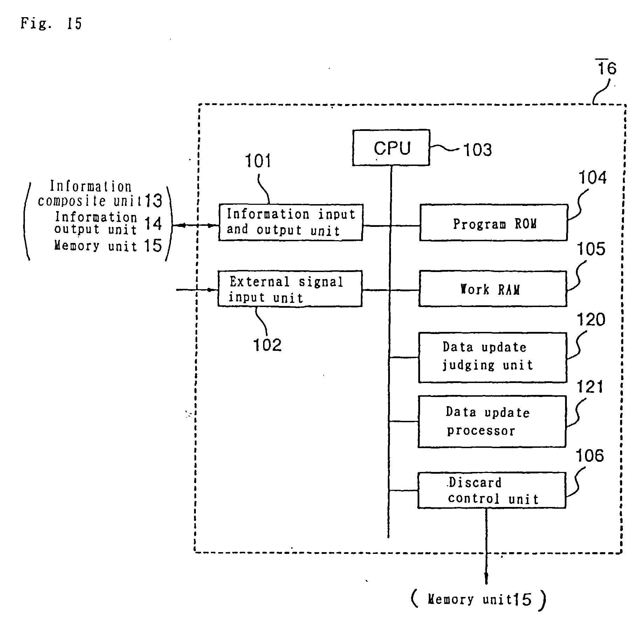

The information receiving apparatus in embodiment 7 of the invention is described in Figs. 14 and 15.

Fig. 14 is a diagram showing a structure of the information receiving apparatus in embodiment 7 of the invention, in which same reference numerals as in Fig. 1 denote same or corresponding parts, and reference numeral 40 is update attribute information generating means for generating a data name and update attribute information composed of data name and flag showing presence or absence of data update, and reference numeral 41 is an update attribute information processor for processing the update attribute information demultiplexed in the demultiplexer 9 and outputting the processed information to the information composite unit 13.

Fig. 15 is a diagram showing a detailed structure of the input and output control unit 16 of the information receiving apparatus in embodiment 7. In Fig. 15, same reference numerals as in Fig. 2 denote same or corresponding parts. Reference numeral 120is a data update judging unit for judging presence or absence of necessity of data update of the service information already stored in the memory unit 15, on the basis of the update attribute information of the service information newly entered in the input and output control unit 16. Reference numeral 121 is a data update processor for updating the data of the service information already stored in the memory unit 15, having the same data name as the data name of the service information as the object of update attribute information of the newly entered service information when the data update judging unit 120 judges that the data update is necessary.

The operation of the information receiving apparatus in embodiment 7 is described below.

The information receiving apparatus of embodiment 7 is to receive the service information sent together with update attribute information from the sender side of the service information, update the contents of the service information already stored in the memory unit in the information receiving apparatus , and process (delete) the data before updating according to the contents of the update attribute information .

When transmitting the service information at the sender side of the information, the transmission signal adding the update attribute information composed of data name and flag showing presence or absence of data update is received through the transmission line, and, first, the channel decoder 8 demodulates the signal transmitted through the transmission line 7 and corrects transmission error. The demultiplexer 9 demultiplexes the signal output from the channel decoder 8, and the demultiplexed signal is output to the information decoder 10,related information processor 11, and update attribute information processor 41. The information composite unit 13 combines the information output from the information decoder 10, related information processor 11, and update attribute information processor 41, and outputs a composite form signal to the information output unit 14 and input and output control unit 16.

The information output to the input and output control unit 16 is processed as follows. That is, the data update judging unit 120 first searches if the service information having the same data name as the data name of the service information as the object of update attribute information of the newly entered service information is present or not in the service information stored in the memory unit 15, and if not present, the newly entered service information is directly stored in the memory unit 15. If the service information in the same data name as the data name of the service information as the object of update attribute information of the newly entered service information is already stored in the memory unit 15, and also the flag showing the presence or absence of data update of the update attribute information of the newly entered service information indicates absence of update, the newly entered service information is not stored in the memory unit 15, and the service information already stored in the memory unit 15 is not updated. On the other hand, if the service information in the same data name as the data name of the service information as the object of update attribute information of the newly entered service information is already stored in the memory unit 15, and also the flag showing the presence or absence of data update of the update attribute information of the newly entered service information indicates presence of update, an update necessary signal showing update processing is necessary is output to the data update processor 121. Receiving this update necessary signal, the data update processor 121 write new data into the service information already stored in the memory unit 15 having the same data name as the data name of the service information as the object of update attribute information of the newly entered service information, and outputs an update processed signal showing updating is processed to the discard control unit 106. Receiving this update processed signal, the discard control unit 106issues a command signal for deleting the data before updating of the service information in which new data is written, to the memory unit15. The memory unit 15, receiving this command signal, deletes the data before updating, thereby terminating the data updating process.

The flow of the action is shown from steps 71 to 78 in Fig. 36.

Herein, if the data name showing the entire data included inthe service information is mentioned in the data name of the service information as the object of the update attribute information, the entire data of the service information is updated by the above operation, and if the data name showing a part of the data included in the service information is mentioned in the data name of the service information as the object of the update attribute information, part of the data of the service information is updated by the above operation.

Thus, in the information receiving apparatus of embodiment 7,the service information sent from the sender side, reproduced in a composite form in the information composite unit 13 of the information receiving apparatus 100, and combined with related information and update attribute information to the information (contents) of picture and sound as service additional information is processed according to the content of the update attribute information in the input and output control unit 16, and therefore the service informa-tion including always updated new data is stored in the memory unit 15, so that the data user can effectively utilize the stored service information by delivering to the information output unit 14 through the input and output control unit 16.

### Embodiment 8

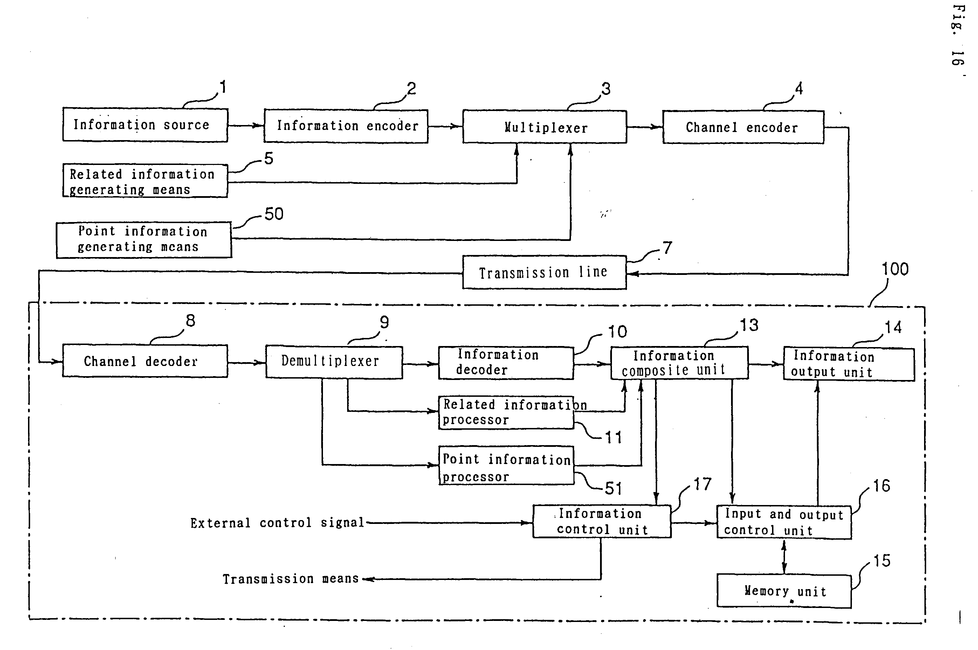

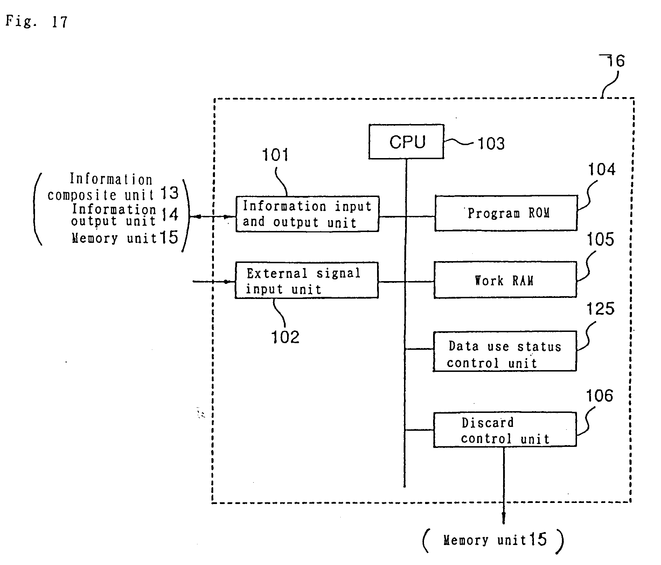

The information receiving apparatus in embodiment 8 of the invention is to control the use of the data of the received service information by the predetermined usable point, and it is classified into four types depending on the difference in the method of control. They are described by referring to Fig. 16 and Fig. 17.

First, the information receiving apparatus in a first example of embodiment 8 of the invention is described by reference to Fig. 16 and Fig. 17.

Fig. 16 is a diagram showing a structure of the information receiving apparatus in the first example of embodiment 8 of the invention, in which same reference numerals as in Fig. 1 denote same or corresponding parts, and reference numeral 50 is point information generating means for generating point information including the data name, data usable points, used result points, and using point table, and reference numeral 51 is a point information processor for processing the point information demultiplexed in the demultiplexer 9 and outputting to the information composite unit 13.

Fig. 17 is a diagram showing a detailed structure of the input and output control unit 16 of the information receiving apparatus in the first example of embodiment 8. In Fig. 17, same reference numerals as in Fig.2 denote same or corresponding parts. Reference numeral 125 is a data use status control unit for controlling the use of data of service information and processing (deleting) of service information, on the basis of the point information of the service information stored in the memory unit 15.

The operation of the information receiving apparatus in the first example of embodiment 8 is described.

The information receiving apparatus in embodiment 8 is to receive the service information sent from the sender side of the service information together with point information, store it in the memory unit, and control the use of data of the service information and processing (deleting) of the service information, on the basis of the point information. Herein, The point information added at the sender side of the information is to be added to the contents of the service information that is the information actually used by the data user, for example, the database or game, and includes, as mentioned above, the data name, data usable points, used result points, and using point table. At the information sender side, a certain value (for example, 1000 points) is set and sent as the usable points. Similarly, 0 point is set and sent as the used result points cumulatively added depending on the use of the data, and necessary points for the use of the contents (for example, 100 points once for database, 50 points once for game) as the using point table.

When the information receiving apparatus receives the transmission signal combined with the data name and the point information showing thus set usable points, used result points, and using point table at the information sender side, first, the channel decoder 8 processes the signal transmitted through the transmission line 7 by digital demodulation and error correction. The demultiplexer 9 demultiplexes the signal issued by the channel decoder 8, and the demultiplexed signal is sent out into the information decoder 10, related information processor 11, and point information processor 51. The information composite unit 13 combines the information issued from the information decoder 10, related information processor 11, and point information processor 51, and sends out into the information output unit 14 and input and output control unit 16. The information sent into the input and output control unit 16 is stored in the memory unit 15. In this way, the service information transmitted from the sender side, reproduced in a combined form in the information composite unit 13 of the information receiving apparatus 100, and combined with the related information and point information as service additional information to the information (contents) of picture and sound, is stored in the memory unit 15 through the input and output control unit 16, so that the data user can utilize the stored service information by outputting to the information output unit 14 through the input and output control unit 16.

Next is explained the operation of processing (deleting) of service information in the information receiving apparatus in the first example of embodiment 8.

When the data user uses the contents, the data user specifies the information desired to be used out of the contents of the service information. As specified by the data user, the data use status control unit 125 of the input and output control unit 16 first reads out the point information of the corresponding service information from the control unit 15, and compares if the value in the sum of the present used result points and the points to be added for the present use of contents is smaller than the usable points or not. When the sum of the used result points and the points to be added for the present use of content is greater than the usable points, the data user cannot use the contents, and a message "No usable points left over" or the like is shown on the display device, not shown, telling the data user that the specified information cannot be used. On the other hand, if the sum of the used result points and the points to be added for the present use of contents is smaller than the usable points, processing for use of the contents starts. When the use of the contents is over, the data use status control unit 125 refers to the using point table of the point information, and adds 100 points, if the used content is the database, or 50 points, if the used content is the game, to the used result points, and stores in the memory unit 15. Moreover, the data use status control unit 125 repeats the above process every time the data user uses the contents, and when the used result points have reached the usable points, it sends an end signal to terminate the usable points to the discard control unit 106. Receiving this end signal, the discard control unit 106 issues a command signal to delete the service information finishing the usable points to the memory unit 15, and the memory unit 15 deletes the corresponding service information.

Thus, in the mode of the first example of embodiment 8, relating to the information receiving apparatus for receiving the service information sent from the sender side, adding, as the additional information, the data name and the point information including at least the data name, data usable points, accumulated points of used data point, and using point table, comprising the memory unit 15 for storing the received service information, when the data of the service information stored in the memory unit 15 is used, the points specified in the using point table are added to the used result points, and when the used result points have reached the data usable points, part or all of the service information is processed, and therefore the information stored in the memory medium of the information receiving apparatus can be deleted automatically and appropriately depending on the using count of data, and therefore the memory medium can be utilized effectively, and the customer control of the service providers may be easy.

A second example of the information receiving apparatus according to embodiment 8 is described by referring to Fig. 16 and Fig. 17. The second example is similar to the first example, and only the difference is described.

In the first example of embodiment 8, receiving the service information containing the data name and the point information including data usable points, accumulated points of used data point, and using point table, the service information is processed on the basis of the result of comparison of data usable points and accumulated points of used data point, and in the second example, too, the information receiving apparatus receives the service information containing the data name and the point information including data usable points, accumulated points of used data point, and using point table, and when the data user utilizes the contents, the points designated in the using point table are subtracted from the data usable points. In this structure, too, the same effects as in the first example of embodiment 8 are obtained. In thus composed information receiving apparatus, the structure of the input and output control unit 16 is basically same as in the first example of embodiment 8 shown in Fig. 17, and when the data user utilizes the contents, the operation is as follows. That is, as thecontent is specified by the data user, the data use status control unit 125 reads out the point information of the corresponding service information from the memory unit 15, and subtracts the points required for the present use of the content from the present data usable points, and after the subtraction, if the data usable points is smaller than zero, use of the content by the data user is disabled, whereas if the data usable points is more than zero, the content using process is started. When the use of the content is over, the data use status control unit 125 refers to the using point table, and, 100 points are subtracted from the data usable points if the used content is the database, or 50 points if the used content is the game, and the balance is stored in the memory unit 15. The data use status control unit 125 repeats the same process every time the data user utilizes the contents, and when the data usable points become zero, an end signal for terminating the usable points is issued to the discard control unit 106. The discard control unit 106, receiving this end signal, issues a command signal for deleting the service information finishing the usable points to the memory unit 15, and accordingly the memory unit 15 deletes the correspond- ing service information.

Herein, instead of eliminating the service information finishing the usable points physically from the memory unit 15, it may be processed to disable use by the data user, and the user pays for the value of the points to the service provider, and receives a rewrite program of the usable point sent from the service provider, or the data package mailed from the service provider, so that the usable points of the service information may be rewritten.

A third example of the information receiving apparatus in embodiment 8 is explained by referring to Fig. 16 and Fig. 17. The third example is similar to the first example, and only the difference is described.

In the first and second examples of embodiment 8, the data usable points are transmitted as additional information of the service information, and stored in the memory unit as data usable points, and in the third example, the data usable points common in plural pieces of service information are held in the data usable points holding unit in the information receiving apparatus. In thus composed information receiving apparatus, from the sender of the service information, the service information containing using point table as additional information is received, and is stored in the memory unit. The structure of the input and output control unit 16 is basically same as that of embodiment 8 shown in Fig. 17, and it operates as follows when the data user utilizes the contents. That is, as the content is specified by the data user, the data use status control unit 125 reads out the using point table of the corresponding service information from the memory unit 15, detects points required for the present use of the content, and subtracts them from the common data usable points held in the data usable points holding unit, and after subtraction, the data usable points are smaller than zero, use of content by the data user is disabled, and if the data usable points are more than zero, the contents using process is started. When the user of the content is over, the data use status control unit 125 refers to the using point table, and subtracts 100 points, if the used content is the database, from the common data usable points, or 50 points, if the used content is the game. The data use status control unit 125 repeats the above process every time the data user utilizes the contents, and when the data usable points have become zero, an end signal showing the end of usable points is issued to the discard control unit 106. Receiving this end signal, the discard control unit 106 issues a command signal for detecting the service information requiring the points for the use of the content (the service information adding using point table as additional information) to the memory unit 15, and the memory unit 15 deletes the corresponding service information accordingly.

Herein, when the common data usable points have become zero, instead of deleting the service information, it may noticed to the sender of the service information (service provider) through communication line or the like that the common data usable points have become zero, and the service provider receiving this notice may send the data showing the service information should be deleted, and when it is received at the information receiving apparatus side, it may be designed to delete the specific service information. In this case, when deleting (discarding) the specific service information, as the price for deletion of service information (service points from the service provider), specified points may be added to the common data usable points held in the data usable points holding unit.

A fourth example of the information receiving apparatus in embodiment 8 is explained by referring to Fig. 16 and Fig. 17. The fourth example is similar to the first example, and only the difference is described.

In the foregoing examples, the data usable points commonly used among plural pieces of service information are held in the data usable points holding unit in the information receiving apparatus, and the usable points specified in the using point table of the service information are subtracted from the data usable points held in the data usable points holding unit, but in the fourth example, which further comprises a accumulated points of used data point holding unit for holding the accumulated points of used data point, points for using data are added to the accumulated points of used data point, and the service information is processed (deleted) on the basis of the result of comparison between the accumulated points of used data point held in the accumulated points of used data point holding unit and the data usable points held in the data usable points holding unit.

### Embodiment 9

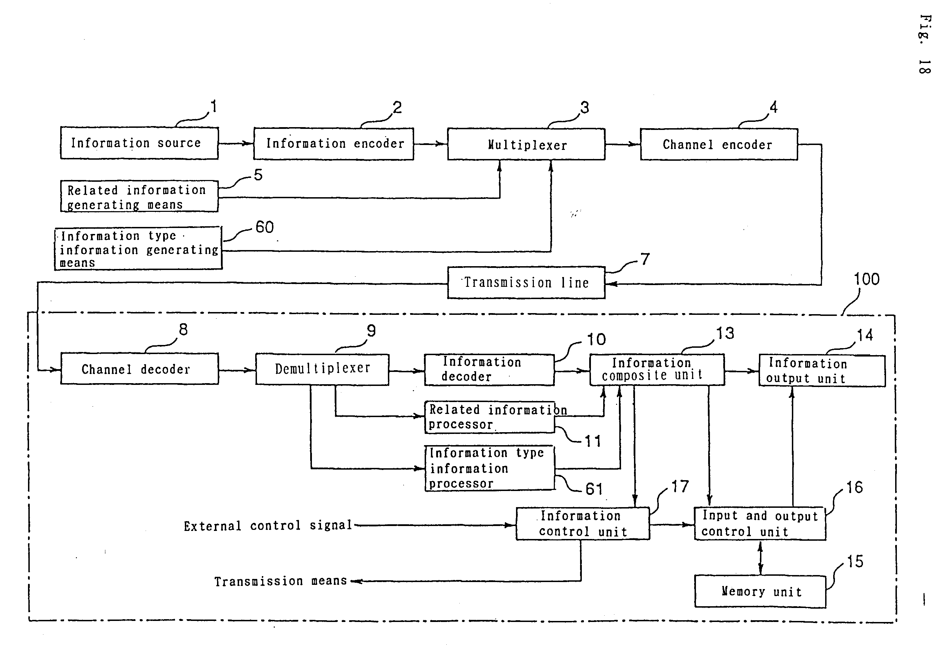

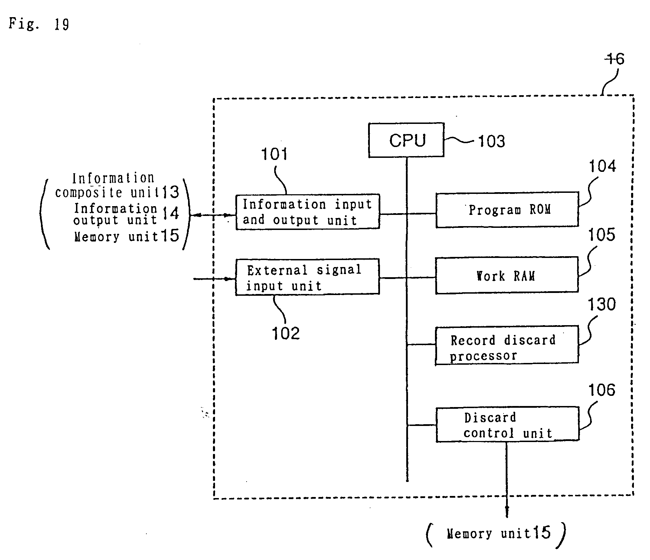

The information receiving apparatus in embodiment 9 of the invention is described below while referring to Fig. 18 and Fig. 19.

Fig. 18 is a diagram showing a structure of the information receiving apparatus in embodiment 9 of the invention, in which same reference numerals as in Fig. 1 are same or corresponding parts, and reference numeral 60 is information type information generating means for generating the data name and information type information including the information type description indicating whether the service information transmitted is "main information" or the official information finally transmitted as the related service information, or "subsidiary information" or secondary information such as summary of official information finally transmitted as related service information, and reference numeral 61 is an information type information processor for processing the information type information demultiplexed in the demultiplexer 9 and outputting to the information composite unit 13.

Fig. 19 is a diagram showing a detailed description of the input and output control unit 16 of the information receiving apparatus of embodiment 9. In Fig. 19, same reference numerals as in Fig. 2 are same or corresponding parts. Reference numeral 130 is a record discard control unit for controlling storing the newly entered service information into the memory unit 15, and processing (deleting) of the service information already stored in the memory unit 15, on the basis of the information type information of the service information newly entered in the input and output control unit 16.

The operation of the information receiving apparatus in embodiment 9 is described below.

The information receiving apparatus of embodiment 9 is to receive the service information sent from the sender side of the service information together with information type information, store the entered service information in the memory unit in the information receiving apparatus according to the content of the information type information, and process (delete) the service information already stored in the memory unit in the information receiving apparatus.

The transmission signal adding the data name and the information type information showing whether the "main information" or the official information transmitted finally, or "subsidiary information" or secondary information such as summary of official information is received, first, the channel decoder 8 demodulates the signal transmitted through the transmission line 7 and corrects transmission error. The demultiplexer 9 demultiplexes the signal issued by the channel decoder 8, and the demultiplexed signal is sent out into the information decoder 10, related information processor 11, and information type information processor 61. The information composite unit 13 combines the information issued from the information decoder 10, related information processor 11, and information type information processor 61, and sends out into the information output unit 14 and input and output control unit 16.

The information sent into the input and output control unit 16 is processed as follows. That is, a record discard control unit 130 first detects if the service information in the same data name as the data name of the service information to be the object of information type information of the newly entered service information is present or not in the service information stored in the memory unit 15, and if absent, the newly entered service information is directly stored in the memory unit 15.

Moreover, if the service information in the same data name as the data name of the service information to be the object of information type information of the newly entered service information is already stored in the memory unit 15, and the information type description of the information type information of the newly entered service information is the "subsidiary information" different from the service information already stored in the memory unit 15, this newly entered information is also directly stored in the memory unit 15.

If the service information in the same data name as the data name of the service information to be the object of information type information of the newly entered service information is already stored in the memory unit 15, and the information type description of the information type information of the newly entered service information is the "subsidiary information" same as the service information already stored in the memory unit 15, the newly entered service information is not stored in the memory unit 15, and the service information already stored in the memory unit 15 is not processed.

On the other hand, if the service information in the same data name as the data name of the service information to be the object of information type information of the newly entered service information is already stored in the memory unit 15, and the information type description of the information type information of the newly entered service information is the "main information," the newly entered service information is stored in the memory unit 15, and a main information record signal showing that the "main information" has been stored in the memory unit 15 is issued to the discard control unit 106. Receiving the main information record signal, the discard control unit 106 issues a command signal for deleting the service information which is the "subsidiary information" having the same data name as the stored "main information" to the memory unit 15. Receiving this command signal, the memory unit 15 deletes part or all of the service information which is the "subsidiary information" having the same data name as the stored "main information."

In this way, the service information transmitted from the sender side, reproduced in a composite form in the information composite unit 13 of the information receiving apparatus 100, and combined with the related information and information type information as service additional information to the information (contents) of picture and sound is processed according to the content of the information type information in the input and output control unit 16, thereby avoiding the state of storing all of "subsidiary information" and "main information" in the memory unit 15, so that the memory medium may be utilized effectively.

A specific example is described below. First, "bargain information" is written in the data name of the service information to be the subject of information type information, and "subsidiary information" in the information type description, and first service information containing bargain sale information 1 (date, place, merchandise A, discount rate a) in the content is transmitted from the sender, and the information receiving apparatus stores this service information in the memory unit 15. Next, "bargain information" is written as the data name of the service information to be the subject of information type information, and "main information" in the information type description, and second service information containing bargain sale information 2 (date, place, merchandise B, discount rate b) in the content is transmitted from the sender. Herein, the information about the time and place is same information as in bargain information 1. When receiving this second service information, in the input and output control unit 16 of the information receiving apparatus, the record discard processor 130 recognizes that the information type information of the second service information is "main information," and stores the second service information in the memory unit 15, and also judges about the first service information having the same data name to delete all data but the data "merchandise A, discount rate a" in the contents from the memory unit 15, and also adds the remaining data "merchandise A, discount rate a" to the second service information which is the main information. As a result, in the memory unit 15, only the second service information containing "date, place, merchandise A, discount rate a, merchandise B, discount rate b" in the content is stored. That is, without missing necessary information, the data size stored in the memory unit 15 can be saved as compared with the case of storing all of "subsidiary information" and "main information" in the memory unit 15, so that the memory medium can be utilized effectively.

In other example, a digest of a program is transmitted as service information of "subsidiary information," and a whole piece of the program is transmitted as service information of "main information."
Firstly, first service information containing program information (digest information) added additional information which has a data name of the service information to be the object of the information written as 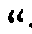 program information 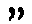 , the information type information showing 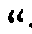 subsidiary information 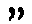 , the distribution schedule, and distribution channel , is transmitted from the sender, and the information receiving apparatus stores this service information in the memory unit 15.

Next, second service information containing the data name of service information to be the object of the information type information written as 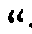 program information 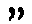 , the information type information written as 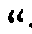 main information 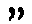 , and the content part written as 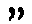 program information(whole program) 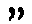 is transmitted from the sender.
When receiving this second information, in the input and output control unit 16 of the information receiving apparatus, the record discard processor 130 recognizes that the information type of the second service information is "main information," and stores the second information in the memory unit 15, and also judges to delete all data of the first service information having the same name from the memory unit 15, so that the first service information is deleted from the memory unit 15. As a result, the digest information lowered in the value of use as the whole program is stored is deleted from the memory medium of the information receiving apparatus, so that the memory medium can be utilized effectively. Herein, instead of deleting all data of the first service informa- tion from the memory unit 15, all data but the contents (digest information) of the first service information may be deleted from the memory unit 15, and the contents (digest information) may be added and stored in the second service information which is the main information. In this way, when the digest information and the whole program are stored in pair, the information of high value of use can be automatically compiled and stored.

Thus, according to the information receiving apparatus of embodiment 9, relating to the information receiving apparatus for receiving the service information sent from the sender side together with at least the information type information showing whether the information is main information or subsidiary information as the additional information, comprising the memory unit 15 for storing the received service information, after receiving the first service information combined with the information type information showing the information is subsidiary information, and storing it in the memory unit 15, when the second service information combined with the information type information showing the information is main information is received, part or all of the first service information stored in the memory unit 15 is processed, and therefore the information stored in the memory medium of the information receiving apparatus can be automatically and adequately deleted, so that the memory medium can be utilized effectively, while the convenience of use by the data user may be enhanced.

### Embodiment 10

The information receiving apparatus in embodiment 10 of the invention is to determine processing of service information by the link information concerning other related service information mentioned in the service information. Embodiment 10 is divided into two types due to difference in the place of adding the link information.

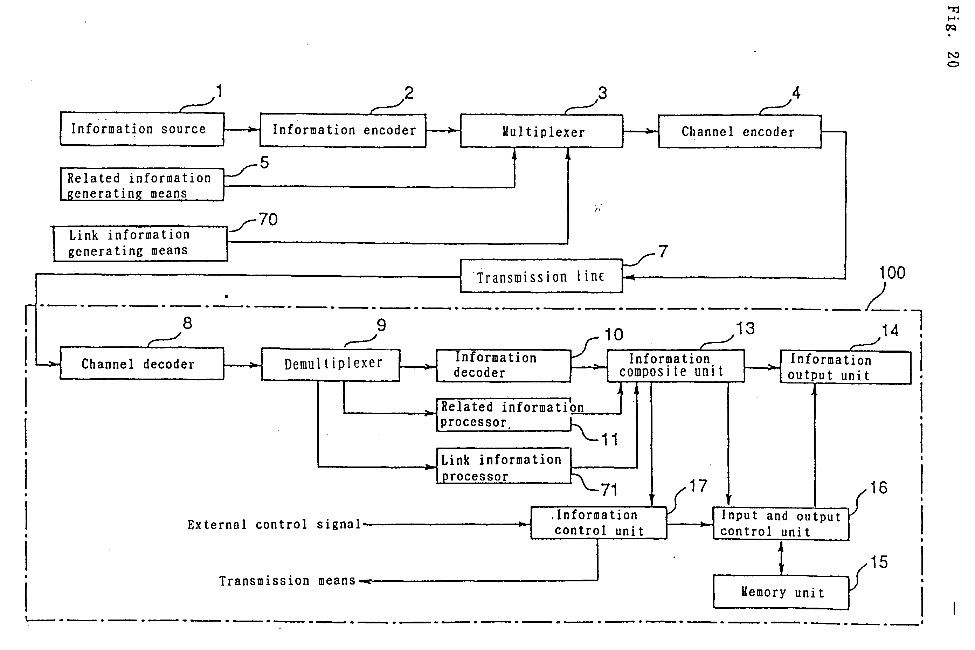

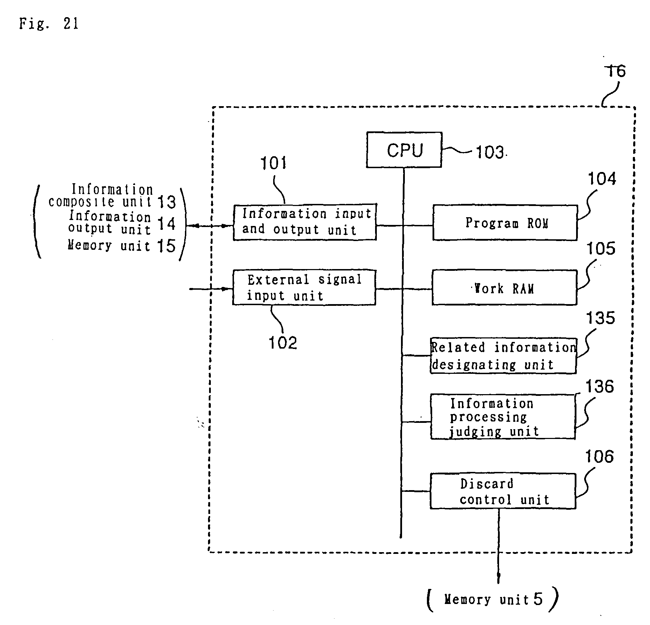

A first example of the information receiving apparatus of embodiment 10 of the invention is described below while referring to Fig. 20 and Fig. 21.

Fig. 20 is a diagram showing a structure of the information receiving apparatus in the first example of embodiment 10 of the invention, in which same reference numerals as in Fig. 1 are same or corresponding parts, and reference numeral 70 is link information generating means for generating link information containing related information designation column, and reference numeral 71 is a link information processor for processing the link information demultiplexed in the demultiplexer 9, and sending out to the information composite unit 13.

Fig. 21 is a diagram showing a detailed structure of the input and output control unit 16 of the information receiving apparatus in the first example of embodiment 10. In Fig. 21, same reference numerals as in Fig. 2 denote same or corresponding parts. Reference numeral 135 represents related information designating unit for writing the data name of the service information relating to the service information in the related information designation column of the link information of the service information, and the storing place of the related service information (address in the memory 15 or the like), and reference numeral 136 is an information process judging unit for detecting which one of the mutually related service information is processed (deleted) as the specified item is written in the related information designation column, and processing similarly in other service information related to the processed service information.

The operation of the information receiving apparatus in the first example of embodiment 10 is described below.

The information receiving apparatus in the first example of embodiment 10 is designed to receive plural pieces of service information transmitted from the sender side of the service information together with link information containing the related information designation column for entering related information, relate mutually by writing specified items in the related information designation column of the link information at the receiver side of the service information, process (delete) the service information stored in the memory unit, in batch of mutually related plural pieces of information, according to the link information. Herein, the link information added at the information sender side is added to the contents of the service information which is the information actually used by he data user, and should contain the data name and related information designation column as mentioned above. At the information sender side, the related information designation column is blank when transmitted.

When the transmission signal added such link information at the information sender side is received through the transmission line 7, first, the channel decoder 8 demodulates the signal transmitted through the transmission line 7 and corrects transmission error. The demultiplexer 9 demultiplexes the signal issued by the channel decoder 8,and the demultiplexed signal is sent out into the information decoder 10,related information processor 11, and link information processor 71.The information composite unit 13 combines the information issued from the information decoder 10, related information processor 11, and link information processor 71, and sends out into the information output unit 14 and input and output control unit 16. The information sent into the input and output control unit 16 is stored in the memory unit 15. In this way, the service information transmitted from the sender side, reproduced in a composite form in the information composite unit 13 of the information receiving apparatus 100, and combined with the related information and link information as service additional information to the information (contents) of picture and sound, is stored in the memory unit 15 through the input and output control unit 16, so that the data user can utilize the stored service information by outputting to the information output unit 14 through the input and output control unit 16.

Next are explained the use of service information and operation of processing (deleting) of service information in the information receiving apparatus in the first example of embodiment 10.

For example, first service information with "Geography of Japan" entered in the data name of service information to be the object of link information, blank in the related information designation, column, and "Map Information of Japan (characters, still picture)" in the contents, and second service information with "Information of Nagano Prefecture" entered in the data name of service information to be the object of link information, blank in the related information designation column, and "Map and Products of Nagano Prefecture (characters, still picture)" in the contents are transmitted from a certain sender or two senders respectively, and stored in the memory unit 15 of the information receiving apparatus. If the data user prefers to use the first and second service information by relating mutually, the data user manipulates an operation input unit, not shown, and writes necessary items in the related information designation columns of the link information added to the first and second service information so as to relate to each other. That is, depending on the operation input by the data user, the related information designating unit 135 fills in the related information designation column of the link information of the first service information with the data name "Information of Nagano Prefecture" of the service information to be the object of link information of the second service information, and the storing place (address in the memory unit 15 or the like) of the second service information, and fills in the related information designation column of the link information of the second service information with the data name "Geography of Japan" of the service information to be the object of the link information of the first service information, and the storing place (address in the memory unit 15 or the like) of the first service information. As a result, when the data user uses one data, for example, the data of "Geography of Japan," the related data of "Information of Nagano Prefecture" can be easily fetched and used.

Afterwards, when the data user discards (deletes) one data, for example, the data of "Geography of Japan" (first service information), the information process judging unit 136 refers to the related information designation column of the link information of the first service information, and detects that there is other service information related to this first service information, that is, the second service information, and judges to process similarly (delete) the second service information same as the first service information. The discard control unit 106 issues a command signal for deleting the second service information to the memory unit 15 on the basis of the judgment of the information process judging unit 136. Receiving this command signal, the memory unit 15 deletes the second service information. Accordingly, when certain service information is deleted, other service information related to this service information can be simultaneously deleted, so that the service information can be arranged very easily. Besides, since the related service information is deleted in the memory unit 15, the state of remaining of the service information lowered in the value of use can be avoided, and the memory medium of the information receiving apparatus can be utilized effectively.

Thus, according to the information receiving apparatus of embodiment 10, the information receiving apparatus for receiving the service information transmitted from the sender side and added additional information having the data name and the link information including at least the related information designation column for entering the information for specifying other related service information at the information receiving apparatus side, comprising the memory unit 15 for storing the received service information, when the service information stored in the memory unit 15 is processed, it is designed to process same as in this service information as for other service information indicated by the link information of the service information, out of other service information stored in the memory means, and therefore the information stored in the memory medium of the information receiving apparatus can be deleted automatically and adequately, so that the memory medium can be utilized effectively, while the convenience of use for the data user may be enhanced.

A second example of the information receiving apparatus of embodiment 10 is described below by referring to Fig. 20 and Fig. 21.The second example is similar to the first example, and only the difference is described below.

In the information receiving apparatus of the first example of embodiment 10, receiving the service information transmitted from the sender side being combined with the data name and the link information including and the related information designation column for entering the information for specifying other related service information at the information receiving apparatus side, the data user enters the information for specifying other related service information in the related information designation column of the service information, so that plural pieces of information are related with each other, whereas in the information receiving apparatus of the second example, receiving the service information transmitted as being preliminarily combined with the link information showing other related service information at the sender side of the service information, when one certain service information is processed, it is designed to process same as in this service information, as for the other service information indicated by the link information of the service information, out of other service information stored in the memory means. The second example of embodiment 10 has the same effects as in the first example of embodiment 10.

### Embodiment 11

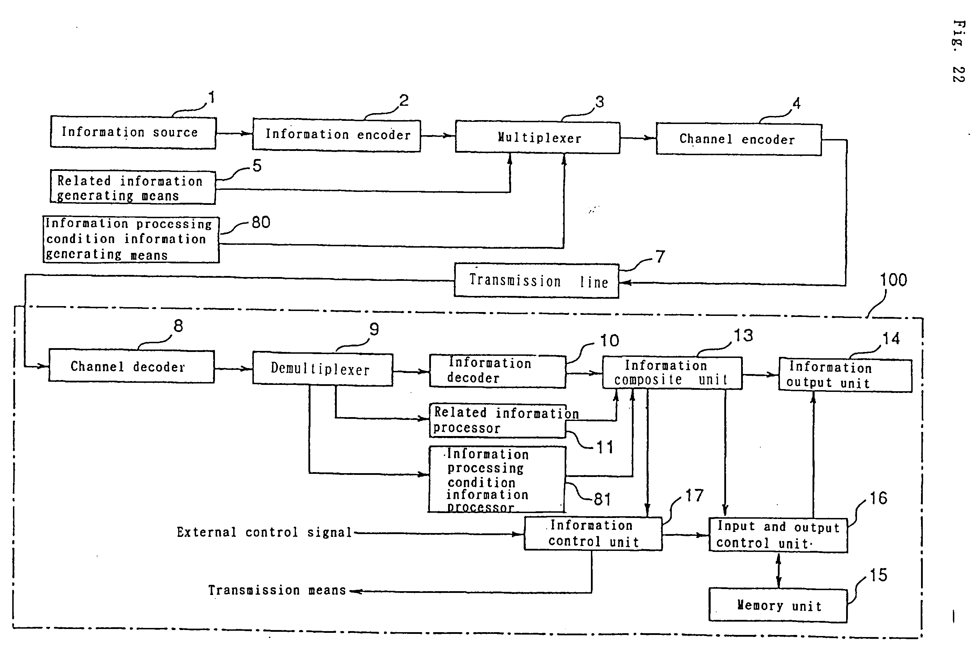

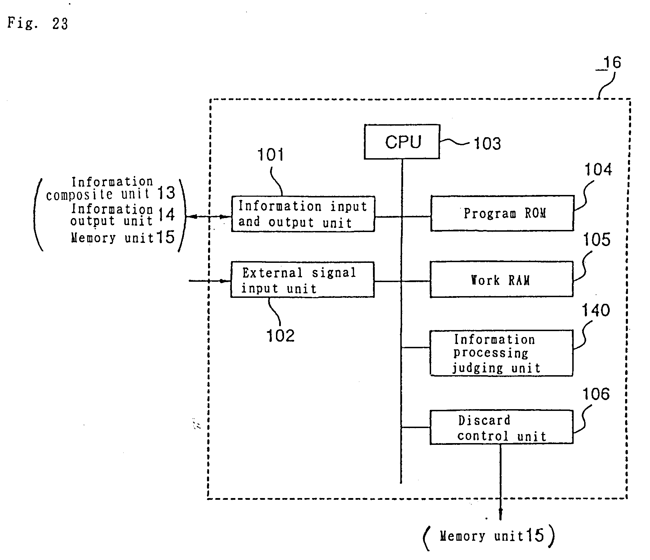

The information receiving apparatus in embodiment 11 of the invention is described by referring to Fig. 22 and Fig. 23. Embodiment 11 is divided into two types, and a first example of the information receiving apparatus is described below.

Fig. 22 is a diagram showing a structure of the information receiving apparatus in embodiment 11 of the invention, in which reference numerals same as in Fig. 1 denote same or corresponding parts, and reference numeral 80 is information processing condition information generating means for generating information processing condition information showing that service information is the object of specific processing when a specific action is done on the service information, and reference numeral 81 is an information processing condition information processor for processing the information processing condition information demultiplexed in the demultiplexer separator 9, and issuing to the information composite unit 13.

Fig. 23 is a diagram showing a detailed structure of the input and output control unit 16 of the information receiving apparatus in the first example of embodiment 11. In Fig. 23, same reference numerals as in Fig. 2 indicate same or corresponding parts.Reference numeral 140 is an information process judging unit for judging specific processing (deleting) as for the service information, when the specific processing determined by the information processing condition information is done on the service information combined with the information processing condition information.

The operation of the information receiving apparatus in the first example of embodiment 11 is described below.

The information receiving apparatus in the first example of embodiment 11 is designed to store the service information sent together with the information processing condition information showing that the service information is the object of specific processing when specific action is done on the service information, in the memory unit, and to process (delete) the service information stored in the memory unit when the specific action is done by the information receiving apparatus on the service information.

When receiving the transmission signal combined with the above information processing condition information at the information sender side, first, the channel decoder 8 demodulates the signal transmitted through the transmission line 7 and corrects transmission error. The demultiplexer 9 demultiplexes the signal issued by the channel decoder 8, and the demultiplexed signal is sent out into the information decoder 10, related information processor 11, and information processing condition information processor 81. The information composite unit 13 combines the information issued from the information decoder 10, related information processor 11, and information processing condition information processor 81, and sends out into the information output unit 14 and input and output control unit 16. The information sent into the input and output control unit 16 is stored in the memory unit 15. In this way, the service information transmitted from the sender side, reproduced in a composite form in the information composite unit 13 of the information receiving apparatus 100, and combined with the related information and information processing condition information as service additional information to the information (contents) of picture and sound, is stored in the memory unit 15 through the input and output control unit 16, so that the data user can utilize the stored service information by delivering to the information output unit 14 through the input and output control unit 16.

Next is explained the operation of processing (deleting) of service information in the information receiving apparatus in the first example of embodiment 11.

In an example presented below, the information processing condition mentioned in the information processing condition information is "Access to service provider," and the content of information processing is "Delete," and such service information is sent from the sender of the service information, and is stored in the memory unit 15 of the information receiving apparatus.

When the data user uses the service information, for example, reading out the service information stored in the memory unit 15 and displaying in the display device, the information process judging unit 140 of the input and output control unit 16 reads out the information processing condition information added to the service information. When the service information is, for example, the user survey, the data user sends a reply to the service provider through the telephone line or the like, and the information process judging unit 140 recognizes the access action to the service provider at this time through the external signal input unit 102, compares the recognized action with the information processing condition information, and when judged to be matched, it is judged necessary to process, that is, to delete the service information. On the basis of the result of this judgement, the discard control unit 106 issues a command signal for deleting the service information to the memory unit 15. The memory unit 15, receiving this command signal, deletes the service information. As a result, the service information not necessary to be left over in the memory medium of the information receiving apparatus once the user replies, such as the user survey, can be automatically deleted, so that the memory medium can be utilized effectively.

Moreover, for example, when the information processing condition mentioned in the information processing condition information is "Five times of data use," and the content of the information processing is "Delete", if the data user reads out and uses the service information from the memory unit 15 five times, the information process judging unit 140 judges it necessary to delete the service information, and the service information is deleted from the memory unit 15. Therefore, the service information provider specifies the specified times of use of data in the information processing condition information as the information processing condition, so that the number of times of use of the service information is limited. Besides, as for the rule of judging "use by user" of data, it can be defined at the provider side of the service information by writing into the information processing condition information. That is, by defining "Five times of action of displaying the data of service information for 1 minute or more in the display device" in the information processing condition information, the "use by user" of data can be defined as the "action of displaying the data of the service information for1 minute or more in the display device."

Besides, when the content of the service information is the merchandise catalog, and the information processing condition mentioned in the information processing condition information is "Five times of merchandise order to the service provider," and the content of information processing is "Delete," if the data user reads out the service information from the memory unit 15 and orders the merchandise through the telephone line five times, the information process judging unit 140 judges it necessary to delete the service information, and the service information is deleted from the memory unit 15. Therefore, as seen from the service provider side, it brings about the same effect as five coupons are issued about merchandise orders, and such service system can be realized easily.

Thus, according to the information receiving apparatus of the first example of embodiment 11, relating to the information receiving apparatus for receiving the service information transmitted from the sender side together with at least the information processing condition information as additional information, comprising the memory unit 15 for storing the received service information, when it is operated at the receiving apparatus side to satisfy the condition specified by the information processing condition information about the service information described in the memory unit 15, part or all of the service information is processed, and therefore the information stored in the memory medium of the information receiving apparatus can be automatically and appropriately deleted, so that the memory medium can be utilized effectively, while the convenience of use for the data user may be enhanced.

A second example of the information receiving apparatus of embodiment 11 is described below. The second example is similar to the first example, and only the difference is described.

In the information receiving apparatus in the first example of embodiment 11, it is designed to receive the service information combined with the information processing condition information at the sender side of the service information, and process the service information stored in the memory unit according to the information processing condition information, whereas the information receiving apparatus in the second embodiment comprises the information processing condition holding unit, and the information processing condition can be written in this information processing condition holding unit from outside at the receiver side of the service information. Herein, writing of information processing condition from outside may be done by the data user by manipulating the input operation unit, not shown, by the data user, or by the information sender through broadcast, telephone line or the like, instead of the data user .

A specific example of such construction mentioned above , which is the case of to receive service information telling the program information including the data name (program information), program name, distribution schedule date, distribution medium, distribution channel, and program information (the cast, synopsis, etc.),is explained below. The data user preliminarily fills the information processing condition holding unit of the information receiving apparatus with the information processing condition of "Reservation of recording of the program when the process-objective-data is program information," and the content of information processing as "Delete data other than program name, distribution schedule date, distribution medium, and distribution channel" as the information processing condition information. First, the data user reads out the service information which is the program information stored in the memory unit, and knows that it is a program to be distributed in future by watching the data on display device. Herein, if the data user wishes to reserve recording of the program introduced in the data of the service information in memory media such as VTR, and reserves recording by manipulation from operation input unit, not shown, so that the information process judging unit 140 judges it necessary to process "Delete data other than program name, distribution schedule date, distribution medium, and distribution channel" of the service information, and the data is deleted from the memory unit 15. As a result, the data of program name, distribution schedule date, distribution medium, and distribution channel are registered in the record reservation control table, not shown, in the information receiving apparatus, and used in execution of recording. Thus, by record reservation, the program information not longer valuable is deleted from the memory unit 15, so that the record medium can be utilized effectively.

### Embodiment 12

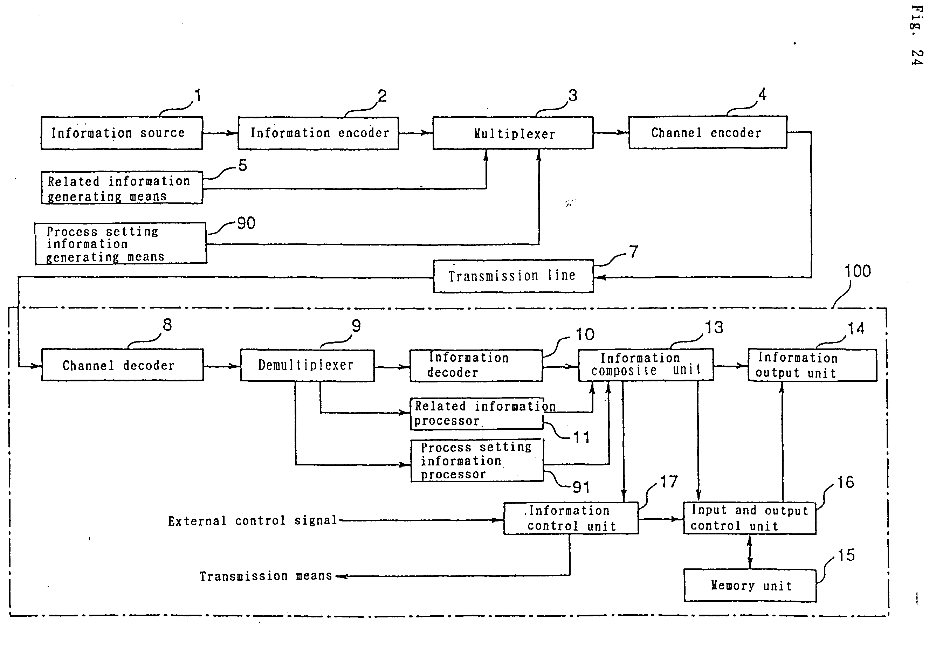

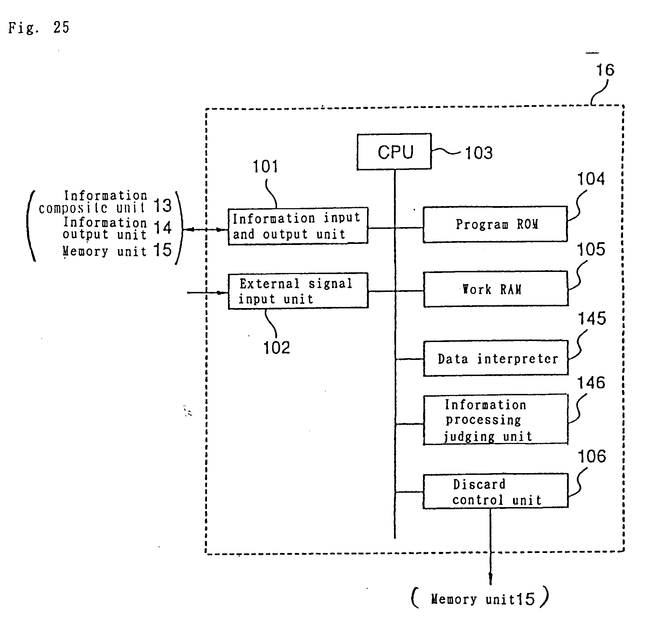

The information receiving apparatus in embodiment 12 of the invention is described below while referring to Fig. 24 and Fig. 25.

Fig. 24 is a diagram showing a structure of the information receiving apparatus in embodiment 12 of the invention, in which same reference numerals as in Fig. 1 denote same or corresponding parts, and reference numeral 90 is process setting information generating means for generating process setting information including data name, and process setting description column showing the object to be processed as specified when specified information processing instruction is entered in the information receiving apparatus, and the process setting description column is filled with the instruction, for example, "Delete when data discard process instruction is received" showing what process is done when the information receiving apparatus receives which information process instruction. Reference numeral 91 is a process setting information processor to be outputting to the information composite unit 13 by processing the process setting information demultiplexed in the demultiplexer 9.

Fig. 25 is a diagram showing a detailed structure of the input and output control unit 16 of the information receiving apparatus in embodiment 12. In Fig. 25, same reference numerals as in Fig. 2 denote same or corresponding parts. Reference numeral 145is a data interpreter for interpreting the specified information process instruction data entered through the external signal input unit 102, and 146 is an information process judging unit for judging about processing of service information stored in the memory unit 15according to the interpretation result in the data interpreter 145. Herein, the specified information processing instruction is transmitted from the sender of the service information through broadcast or telephone line, and is the data including, for example, the data name, and attribute information (service additional information) containing the data discard instruction content.

The operation of the information receiving apparatus in embodiment 12 is described below.

The information receiving apparatus of embodiment 12 is designed to store, in the memory unit, the service information transmitted from the sender side of the service information togetherwith the processing setting information showing the object of specific process when the specific information processing instruc- tion is entered in the information receiving apparatus, and to process (delete) the service information stored in the memory unit when receiving the information process instruction.

When receiving the transmission signal combined with such process setting information at the information sender side through the transmission line, first, the channel decoder 8 demodulates the signal transmitted through the transmission line 7 and correct tramsmition error . The demultiplexer 9 demultiplexes the signal issued by the channel decoder 8,and the demultiplexed signal is sent out into the information decoder 10,related information processor 11, and processing setting information processor 91. The information composite unit 13 combines the information issued from the information decoder 10, related information processor 11, and process setting information processor 91, and sends out into the information output unit 14 and input and output control unit 16. The information sent into the input and output control unit 16 is stored in the memory unit 15. In this way, the service information transmitted from the sender side, reproduced in a composited form in the information composite unit 13 of the information receiving apparatus 100, and combined with the related information and process setting information as service additional information to the information (contents) of picture and sound, is stored in the memory unit 15 through the input and output control unit 16, so that the data user can utilize the stored service information by outputting to the information output unit 14 through the input and output control unit 16.

Next is explained the operation of processing (deleting) of service information in the information receiving apparatus in the first example of embodiment 12.

For example, the service information describing "Delete when data discard process instruction is received" in the process setting description column of the process setting information is transmitted from the sender of the service information, and is stored in the memory unit 15 of the information receiving apparatus.

After the service information is presented (sent) at the service information sender (service provider) side, if it becomes necessary to disable the use of the transmitted service information by the data user, the information sender transmits the data showing "Data delete processing" as the data name of the service information to be the object of the attribute information and "Object terminal ID, discard data name" as the data discard instruction content, through broadcast or telephone line.

The input and output control unit 16 of the information receiving apparatus of embodiment 12 receives the data of "Data discard process" through the external signal input unit 102, and interprets it in the data interpreter 145. The information process judging unit 146 confirms, according to the result of interpretation in the data interpreter 145, that the own terminal is the object terminal, that the service information having the same data name as the discard data name is stored in the memory unit 15, an moreover that "Delete when data discard process instruction is received" is described in the process setting description column of the service information, and then judges it necessary to process (delete) this service information. When the information process judging unit 146 judges it necessary to process (delete) the service information, the discard control unit 106 issues a command signal to delete the corresponding service information to the memory unit 15. The memory unit 15, receiving this command signal, deletes the service information.

Thus, according to the information receiving apparatus of embodiment 12, relating to the information receiving apparatus for receiving the service information transmitted from the sender side together with at least the data name and the process setting description column showing the object of specific processing when specific information processing instruction is entered in the information receiving apparatus as additional information, comprising the memory unit 15 for storing the received service information, when the specific information processing instruction specified by the process setting information is entered in the information receiving apparatus, it is designed to process the service information as the object of processing described in the information process instruction data out of the service information stored in the memory unit 15, and therefore the information stored in the memory medium of the information receiving apparatus can be automatically and appropriately deleted, so that the memory medium can be utilized effectively, while the convenience of use for the data user may be enhanced.

Thus, according to claim 1 of the invention relating to an information receiving apparatus for receiving service information sent from a sender side together with at least time information as additional information, comprising memory means for storing the received service information, time information reading means for reading the time information from the service information stored in the memory means, comparator means for comparing the time information being read out by the time information reading means and set time information kept in the receiving apparatus, and information processing means for processing part or all of the service information corresponding to the time information, on the basis of result of comparison by the comparator means, therefore, the information stored in the memory medium of the information receiving apparatus can be automatically and adequately deleted, and the memory medium can be utilized effectively, while the convenience of use for the data user may be enhanced at the same time.

According to claim 2 of the invention relating to an information receiving apparatus for receiving service information sent from a sender side together with additional information, comprising memory means for storing the received service information, time information adding means for adding time information to the service information as additional information, time information reading means for reading the time information from the service information stored in the memory means, comparator means for comparing the time information being read out by the time information reading means and set time information kept in the receiving apparatus, and information processing means for processing part or all of the service information corresponding to the time information, on the basis of result of comparison by the comparator means, therefore, the information stored in the memory medium of the information receiving apparatus can be automatically and adequately deleted, and the memory medium can be utilized effectively, while the convenience of use for the data user may be enhanced at the same time.

According to claim 6 of the invention relating to an information receiving apparatus for receiving service information sent from a sender side together with additional information, comprising memory means for storing the received service information, time information adding means for adding time information to the service information as additional information, a reference period holding unit for holding reference time information showing a valid term for specific service information, time information reading means for reading the time information of the specific service information from the service information stored in the memory means, comparator means for judging if the time indicated by set time information kept in the receiving apparatus has passed or not the valid term held by the reference period holding unit from the time indicated by the time information, and information processing means for processing part or all of the service information corresponding to the time information, on the basis of result of comparison by the comparator means, therefore, the information stored in the memory medium of the information receiving apparatus can be automatically and adequately deleted, and the memory medium can be utilized effectively, while the convenience of use for the data user may be enhanced at the same time.

According to claim 11 of the invention relating to an information receiving apparatus for receiving service information sent from a sender side together with at least information showing the data size added to the service information as additional information, comprising memory means for storing the received service information, data size comparator means for reading out the information about the data size of the plural pieces of service information from the service information stored in the memory means, and mutually comparing the data size added to the plural pieces of service information, and information processing means for processing part or all of the service information by selecting certain service information from the plural pieces of service information, on the basis of result of comparison by the data size comparator means, therefore, the information stored in the memory medium of the information receiving apparatus can be automatically and adequately deleted, and the memory medium can be utilized effectively, while the convenience of use for the data user may be enhanced at the same time.

According to claim 12 of the invention relating to an information receiving apparatus for receiving service information sent from a sender side together with at least information showing the data size added to the service information as additional information, comprising memory means for storing the received service information, data size comparator means for reading out the information about the data size from the service information stored in the memory means, and comparing the data size being read out with predetermine reference data size, and information processing means for processing part or all of the service information, on the basis of result of comparison by the data size comparator means, therefore, the information stored in the memory medium of the information receiving apparatus can be automatically and adequately deleted, and the memory medium can be utilized effectively, while the convenience of use for the data user may be enhanced at the same time.

According to claim 13 of the invention relating to an information receiving apparatus for receiving service information sent from a sender side together with additional information, comprising memory means for storing the received service information, restoring count information adding means for adding and storing the count information of re-storing actions of the service information in the memory means after reading the service information from the memory means, as additional information in the memory means when re-storing the corresponding service information, re-storing count information reading means for reading the re-storing count information from the service information stored in the memory means, comparator means for comparing the re-storing count information being read out by the re-storing count information reading means with predetermined set count information, and information processing means for processing part or all of the service information corresponding to the re-storing count information, on the basis of result of comparison by the comparator means, therefore, the information stored in the memory medium of the information receiving apparatus can be automatically and adequately deleted, and the memory medium can be utilized effectively, while the convenience of use for the data user may be enhanced at the same time.

According to claim 14 of the invention relating to an information receiving apparatus for receiving service information sent from a sender side together with additional information, comprising memory means for storing the received service information, reading count information adding means for adding and storing the count information of reading actions of the service information from the memory means, as additional information in the memory means to the corresponding service information, reading count information reading means for reading the reading count information from the service information stored in the memory means, comparator means for comparing the reading count information being read out by the reading count information reading means with predetermined set count information, and information processing means for processing part or all of the service information corresponding to the reading count information, on the basis of result of comparison by the comparator means, therefore, the information stored in the memory medium of the information receiving apparatus can be automatically and adequately deleted, and the memory medium can be utilized effectively, while the convenience of use for the data user may be enhanced at the same time.

According to claim 15 of the invention relating to an information receiving apparatus for receiving service information sent from a sender side together with at least price information of the information as additional information, comprising memory means for storing the received service information, price comparator means for reading out the price information of the plural pieces of service information from the service information stored in the memory means, and mutually comparing the prices of the plural pieces of information, and information processing means for processing part or all of the service information by selecting certain service information from the plural pieces of service information, on the basis of result of comparison by the price comparator means, therefore, the information stored in the memory medium of the information receiving apparatus can be automatically and adequately deleted, and the memory medium can be utilized effectively, while the convenience of use for the data user may be enhanced at the same time.

According to claim 16 of the invention relating to an information receiving apparatus for receiving service information sent from a sender side together with at least price information of the information as additional information, comprising memory means for storing the received service information, price comparator means for reading out the price information from the service information stored in the memory means, and comparing it with a predetermine reference price, and information processing means for processing part or all of the service information, on the basis of result of comparison by the price comparator means, therefore, the information stored in the memory medium of the information receiving apparatus can be automatically and adequately deleted, and the memory medium can be utilized effectively, while the convenience of use for the data user may be enhanced at the same time.

According to claim 17 of the invention relating to an information receiving apparatus for receiving service information sent from a sender side together with data name and update attribute information including at least flag showing presence or absence of update, as additional information, comprising memory means for storing the received service information, and information processing means for storing only the received service information in the memory means when the service information in the same data name as the service information subject to update attribute information of the received service information is not stored in the memory means, storing the received service information in the memory means when the service information in the same data name as the service information subject to update attribute information of the received service information is stored in the memory means, and the flag showing presence or absence of update of the update attribute information of the corresponding received service information shows presence of update, and deleting the service information in the same data name as the service information subject to update attribute information of the received service information of the service information stored in the memory means, therefore, the information stored in the memory medium of the information receiving apparatus can be automatically and adequately deleted, and the memory medium can be utilized effectively, while the convenience of use for the data user may be enhanced at the same time.

According to claim 18 of the invention relating to an information receiving apparatus for receiving service information sent from a sender side together with data name and point information including at least , data usable points, accumulated points of used data points , and using point table, as additional information, comprising memory means for storing the received service information, and information processing means for adding points determined in the using point table to the accumulated points of used data points when using the data of the service information stored in the memory means, and processing part or all of the corresponding service information when the accumulated points of used data points have reached the data usable points, therefore, the information stored in the memory medium of the information receiving apparatus can be automatically and adequately deleted, and the memory medium can be utilized effectively, while the convenience of use for the data user may be enhanced at the same time.

According to claim 19 of the invention relating to an information receiving apparatus for receiving service information sent from a sender side together with data name and point information including at least , data usable points, accumulated points of used data points, and using point table, as additional information, comprising memory means for storing the received service information, and information processing means for subtracting points determined in the using point table from the data usable points when using the data of the service information stored in the memory means, and processing part or all of the corresponding service information when the data usable points have become zero, therefore, the information stored in the memory medium of the information receiving apparatus can be automatically and adequately deleted, and the memory medium can be utilized effectively, while the convenience of use for the data user may be enhanced at the same time.

According to claim 20 of the invention relating to an information receiving apparatus for receiving service information sent from a sender side together with data name and point information including at least using point table, as additional information, comprising memory means for storing the received service information, data usable point holding unit for holding data usable points, and information processing means for subtracting points determined in the using point table from the data usable points held in the data usable point holding unit when using the data of the service information stored in the memory means, and processing part or all of the service information to which the point information is added when the data usable points have become zero, therefore, the information stored in the memory medium of the information receiving apparatus can be automatically and adequately deleted, and the memory medium can be utilized effectively, while the convenience of use for the data user may be enhanced at the same time.

According to claim 21 of the invention relating to an information receiving apparatus for receiving service information sent from a sender side together with data name and point information including at least using point table, as additional information, comprising memory means for storing the received service information, data usable point holding unit for holding data usable points, data using result holding unit for holding the accumulated points of used data points, and information processing means for adding points determined in the using point table to the accumulated points of used data points held in the accumulated points of used data point holding unit when using the data of the service information stored in the memory means, and processing part or all of the service information to which the point information is added when the accumulated points of used data points have reached the data usable points held in the data usable point holding unit, therefore, the information stored in the memory medium of the information receiving apparatus can be automatically and adequately deleted, and the memory medium can be utilized effectively, while the convenience of use for the data user may be enhanced at the same time.

According to claim 22 of the invention relating to an information receiving apparatus for receiving service information sent from a sender side together with at least information classification information showing whether the information is main information or subsidiary information, as additional information, comprising memory means for storing the received service information, and information processing means for receiving first service information to which information classification information showing that the information is subsidiary information is added, storing it in the memory means, and processing the information in part or all of the first service information stored in the memory means when receiving second service information to which information classification information showing that the information is main information relating to the first service information, therefore, the information stored in the memory medium of the information receiving apparatus can be automatically and adequately deleted, and the memory medium can be utilized effectively, while the convenience of use for the data user may be enhanced at the same time.

According to claim 23 of the invention relates to an information receiving apparatus for receiving service information sent from a sender side together with link information including at least data name and related information designation column for entering the information for specifying other related service information at the information receiving apparatus side, as additional information, comprising memory means for storing the received service information, means for entering the information for specifying other related service information in the related information designation column, and service information processing means for processing same as in the pertinent service information, on other service information indicated by the link information of the same service information, out of other service information stored in the memory means, when the service information stored in the memory means is processed, therefore, the information stored in the memory medium of the information receiving apparatus can be automatically and adequately deleted, and the memory medium can be utilized effectively, while the convenience of use for the data user may be enhanced at the same time.

According to claim 24 of the invention relating to an information receiving apparatus for receiving service information sent from a sender side together with at least link information showing other related service information as additional information, comprising memory means for storing the received service information, and service information processing means for processing same as in the pertinent service information, on other service information indicated by the link information of the same service information, out of other service information stored in the memory means, when the service information stored in the memory means is processed, therefore, the information stored in the memory medium of the information receiving apparatus can be automatically and adequately deleted, and the memory medium can be utilized effectively, while the convenience of use for the data user may be enhanced at the same time.

According to claim 25 of the invention relating to an information receiving apparatus for receiving service information sent from a sender side together with at least information processing condition information as additional information, comprising memory means for storing the received service information, and information processing means for processing part or all of the service information, when the receiving apparatus side operates by satisfying the condition specified in the information processing condition information on the service information stored in the memory means, therefore, the information stored in the memory medium of the information receiving apparatus can be automatically and adequately deleted, and the memory medium can be utilized effectively, while the convenience of use for the data user may be enhanced at the same time.

According to claim 26 of the invention relating to an information receiving apparatus for receiving service information sent from a sender side together with additional information, comprising memory means for storing the received service information, and information processing means for reading out the service information from the memory means, and processing part or all of the service information, when a specified action preset in the information receiving apparatus is done relating to this service information, therefore, the information stored in the memory medium of the information receiving apparatus can be automatically and adequately deleted, and the memory medium can be utilized effectively, while the convenience of use for the data user may be enhanced at the same time.

According to claim 27 of the invention relating to an information receiving apparatus for receiving service information sent from a sender side together with data name and processing setting information including at least processing designation column showing the object of receiving specified processing when specified information processing instruction is entered in the information receiving apparatus, as additional information, comprising memory means for storing the received service information, and information processing means for processing as specified on the service information as the object of processing described in the information processing instruction data out of the service information stored in the memory means, when the specified information processing instruction designated by the processing setting information is entered in the information receiving apparatus, therefore, the information stored in the memory medium of the information receiving apparatus can be automatically and adequately deleted, and the memory medium can be utilized effectively, while the convenience of use for the data user may be enhanced at the same time.

## Claims

1. An information receiving apparatus for receiving service information sent from a sender side together with at least time information as additional information, comprising:
memory means for storing said received service information,
time information reading means for reading out said time information from the service information stored in the memory means,
comparator means for comparing said time information being read out by said time information reading means and set time information kept in said receiving apparatus, and
information processing means for processing part or all of the service information corresponding to said time information, on the basis of result of comparison by said comparator means.

2. An information receiving apparatus for receiving service information sent from a sender side together with additional information, comprising:
memory means for storing said received service information,
time information adding means for adding time information to said service information as additional information,
time information reading means for reading out said time information from the service information stored in the memory means,
comparator means for comparing said time information being read out by said time information reading means and set time information kept in said information receiving apparatus, and
information processing means for processing part or all of the service information corresponding to said time information, on the basis of result of comparison by said comparator means.

3. An information receiving apparatus of claim 2, wherein said time information adding means adds the time when storing said received service information in said memory means as additional information.

4. An information receiving apparatus of claim 2, wherein said time information adding means stores the time when reading out said service information stored in said memory means in the memory means as additional information.

5. An information receiving apparatus of claim 2, wherein said time information adding means stores the time when first read- ing out said service information stored in said memory means in the memory means as additional information.

6. An information receiving apparatus for receiving service information sent from a sender side together with additional information, comprising:
memory means for storing said received service information,
time information adding means for adding time information to said service information as additional information,
a reference period holding unit for holding reference time information showing a valid term for specific service information,
time information reading means for reading out said reference period information of said specific service information from the service information stored in the memory means,
comparator means for judging if the time indicated by set time information kept in said information receiving apparatus has passed or not the valid term held by said reference period holding unit from the time indicated by said time information, and
information processing means for processing part or all of the service information corresponding to said time information, on the basis of result of comparison by said comparator means.

7. An information receiving apparatus of claim 6, wherein the reference time information held in the reference period holding unit is transmitted from the sender as additional information of said specific service information as being added to said specific service information.

8. An information receiving apparatus of any one of claims 1 to 7, wherein said set time information is the present time determined by the clock.

9. An information receiving apparatus of any one of claims 1 to 7, wherein said set time information is entered by the data user.

10. An information receiving apparatus of any one of claims1 to 7, wherein said set time information is entered from the senderof the service information through broadcast or telephone line.

11. An information receiving apparatus for receiving service information sent from a sender side together with at least information showing the data size added to the service information as additional information, comprising:
memory means for storing said received service information,
data size comparator means for reading out the information about said data size of said plural pieces of service information from the service information stored in the memory means, and mutually comparing the data size added to said plural pieces of service information, and
information processing means for selecting any service information from said plural pieces of service information, on the basis of result of comparison by said data size comparator means processing part or all of the service information .

12. An information receiving apparatus for receiving service information sent from a sender side together with at least information showing the data size added to the service information as additional information, comprising:
memory means for storing said received service information,
data size comparator means for reading out the information about said data size from the service information stored in the memory means, and comparing the data size being read out with predetermined specific reference data size, and
information processing means for processing part or all of the service information, on the basis of result of comparison by said data size comparator means.

13. An information receiving apparatus for receiving service information sent from a sender side together with additional information, comprising:
memory means for storing said received service information
re-storing count information adding means for reading said service information from the memory means, and adding the count information of re-storing the service information in said memory means as additional information when re-storing the corresponding service information and re-storing said service information,
re-storing count information reading means for reading said re-storing count information from the service information stored in the memory means,
comparator means for comparing said re-storing count information being read out by said re-storing count information reading means with predetermined set count information, and
information processing means for processing part or all of the service information corresponding to said re-storing count information, on the basis of result of comparison by said comparator means.

14. An information receiving apparatus for receiving service information sent from a sender side together with additional information, comprising:
memory means for storing said received service information,
reading count information adding means for adding the count information of reading said service information from the memory means as additional information to the corresponding service information, and storing said service information with said count information in said memory means,
reading count information reading means for reading out said reading count information from the service information stored in the memory means,
comparator means for comparing said reading count information being read out by the reading count information reading means with predetermined set count information, and
information processing means for processing part or all of the service information corresponding to said reading count information, on the basis of result of comparison by said comparator means.

15. An information receiving apparatus for receiving service information sent from a sender side together with at least price information for using the information as additional information, comprising:
memory means for storing said received service information,
price comparator means for reading out said price information of said plural pieces of service information out of the service information stored in the memory means, and comparing the prices of said plural pieces of service information mutually, and
information processing means for selecting some of certain service information out of said plural pieces of service information, on the basis of result of comparison by said price comparator means and processing part or all of said service information.

16. An information receiving apparatus for receiving service information sent from a sender side together with at least price information of the information as additional information, comprising:
memory means for storing said received service information
price comparator means for reading out said price information from the service information stored in the memory means, and comparing it with a predetermined reference price, and
information processing means for processing part or all of said service information, on the basis of result of comparison by said price comparator means.

17. An information receiving apparatus for receiving service information sent from a sender side together with update attribute information including at least data name and flag showing presence or absence of update, as additional information, comprising:
memory means for storing said received service information, and
information processing means for storing only said received service information in the memory means when the service information in the same data name as the service information subject to update attribute information of the received service information is not stored in the memory means,
storing the received service information in the memory means when the service information in the same data name as the service information subject to update attribute information of the received service information is stored in the memory means, and the flag showing presence or absence of update of the update attribute information of the corresponding received service information shows presence of update, and
deleting the service information which has the same data name as the service information subject to update attribute information of the received service information and has been stored in the memory means before receiving said update attribute information .

18. An information receiving apparatus for receiving service information sent from a sender side together with data name and point information including at least data usable points, accumulated points of used data points, and using point table, as additional information, comprising:
memory means for storing said received service information, and
information processing means for adding points determined in said using point table to the accumulated points of used data points when using the data of the service information stored in the memory means, and
processing part or all of the corresponding service information when the accumulated points of used data points have reached the data usable points.

19. An information receiving apparatus for receiving service information sent from a sender side together with data name and point information including at least data usable points, accumulate points of used data points , and using point table, as additional information, comprising:
memory means for storing said received service information, and
information processing means for subtracting points determined in the using point table from the data usable points when using the data of the service information stored in the memory means, and
processing part or all of the corresponding service information when the data usable points have become zero.

20. An information receiving apparatus for receiving service information sent from a sender side together with data name and point information including at least using point table, as additional information, comprising:
memory means for storing said received service information,
data usable point holding unit for holding data usable points to be used for plural service information commonly, and
information processing means for subtracting points determined in the using point table from the data usable points held in the data usable point holding unit when using the data of the service information stored in the memory means, and
processing part or all of the service information to which the point information is added when the data usable points have become zero.

21. An information receiving apparatus for receiving service information sent from a sender side together with data name and point information including at least using point table, as additional information, comprising:
memory means for storing said received service information,
data usable point holding unit for holding data usable points,
accumulated points of used data point holding unit for holding the accumulated points of used data points, and
information processing means for adding points determined in the using point table to the accumulated points of used data point held in the accumulated points of used data point holding unit when using the data of the service information stored in the memory means, and
processing part or all of the service information to which said point information is added when the accumulated points of used data points have reached the data usable points held in the data usable point holding unit.

22. An information receiving apparatus for receiving service information sent from a sender side together with at least information classification information showing whether the information is main information or subsidiary information, as additional information, comprising:
memory means for storing said received service information, and
information processing means for receiving first service information to which information classification information showing that the information is subsidiary information is added, storing it in the memory means, and processing the information in part or all of the first service information stored in the memory means when receiving second service information having information classification information showing that the second service information is main information relating to the first service information.

23. An information receiving apparatus for receiving service information sent from a sender side together with data name and link information including at least related information designation column for entering the information for specifying other related service information at the information receiving apparatus side, as additional information, comprising:
memory means for storing said received service information,
means for entering the information for specifying other related service information in said related information designation column, and,
information processing means for reading out service information from memory means and processing same as in the pertinent service information, on other service information indicated by the link information of the same service information, out of other service information stored in the memory means, when said service information read out is processed.

24. An information receiving apparatus for receiving service information sent from a sender side together with at least link information showing other related service information as additional information, comprising:
memory means for storing said received service information, and
information processing means for reading out service information from memory means processing same as in the pertinent service information, on other service information indicated by the link information of the same service information, out of other service information stored in the memory means, when said service information read out is processed.

25. An information receiving apparatus for receiving service information sent from a sender side together with at least information processing condition information as additional informa- tion, comprising:
memory means for storing said received service information, and
information processing means for processing part or all of the service information, when the receiving apparatus side operates by satisfying the condition specified in the information processing condition information on the service information stored in the memory means.

26. An information receiving apparatus for receiving service information sent from a sender side together with additional information, comprising:
memory means for storing said received service information, and
information processing means for reading out the service information from the memory means, and processing part or all of the service information, when a specified action preset in the information receiving apparatus is done relating to this service information.

27. An information receiving apparatus for receiving service information sent from a sender side together with data name and processing setting information including at least processing designation column showing the object to be done specified processing when specified information processing instruction is entered in the information receiving apparatus, as additional information, comprising:
memory means for storing said received service information, and
information processing means for processing as specified on the service information to be the object of processing described in the information processing instruction data out of the service information stored in the memory means, when the specified information processing instruction designated by the processing setting information is entered in the information receiving apparatus.

28. An information receiving method, being a method of receiving service information sent from a sender side together with at least time information as additional information, comprising the steps of:
storing said received service information,
reading out said time information from said stored service information,
comparing said time information and set time information, and
processing part or all of the service information corresponding to the time information, on the basis of the result of comparison.

29. An information receiving method, being a method of receiving service information sent from a sender side together with additional information, comprising the steps of:
storing said received service information,
adding time information to said service information as additional information,
reading out said time information from said stored service information,
comparing said time information and set time information, and
processing part or all of the service information corresponding to the time information, on the basis of the result of comparison.

30. An information receiving method of claim 29, wherein said time information has the time storing said received service information added as additional information.

31. An information receiving method of claim 29, wherein the time when reading out said service information is described as additional information.

32. An information receiving method of claim 29, wherein the time when first reading out said service information is described as additional information.

33. An information receiving method of receiving service information sent from a sender side together with additional information, comprising the steps of:
adding time information to said service information as additional information
storing said service information to which the additional information is added,
holding reference time information showing a valid term about specific service information,
reading out said time information added to said specific service information out of stored service information,
judging if the time indicated by the predetermined set time information has passed or not the held valid term from the time indicated by the time information, and
processing part or all of said service information to which said time information is added, on the basis of the result of comparison.

34. An information receiving method of claim 33, wherein the reference time information is sent as being added at the sender side to the specific service information as additional information of the specific service information.

35. An information receiving method of receiving service information sent from a sender side together with information showing at least the data size of the information as additional information, comprising the steps of:
storing said received service information,
reading out the information relating to the data size of said plural pieces of service information out of stored service information,
comparing the data sizes of the plural pieces of service information mutually,
selecting some of certain service information out of said service information on the basis of the result of comparison of data size, and
processing part or all of said selected service information.

36. An information receiving method of receiving service information sent from a sender side together with information show- ing at least the data size of the information as additional infor- mation, comprising the steps of:
storing said received service information,
reading out the information relating to the data size from said stored service information,
comparing the read-out data size with specific reference data size, and
processing part or all of said service information on the basis of the result of comparison of data size.

37. An information receiving method of receiving service information sent from a sender side together with additional information, comprising the steps of:
storing said received service information,
reading out said service information, and adding the count information of the re-storing actions of the service information as additional information to said service information when re-storing said service information,
storing said service information together with said count information,
reading out said re-storing count information from said stored service information,
comparing the re-storing count and a predetermined set count, and
processing part or all of the service information corresponding to said re-storing count, on the basis of the result of comparison.

38. An information receiving method of receiving service information sent from a sender side together with additional information, comprising the steps of:
storing said received service information,
adding the count information of reading actions of the service information to the corresponding service information as additional information,
storing said service information together with said count information,
reading out said read count information from said stored service information,
comparing said reading count and a predetermined setcount information, and
processing part or all of the service information corresponding to said read count information, on the basis of the result of comparison.

39. An information receiving method of receiving service information sent together with the data name and update attribute information including at least flag indicating presence or absence of update, as additional information, comprising the steps of:
storing said received service information,
storing said received service information when the service information having the same data name as the service information to be the object of update attribute information of the received service information is not stored,
storing said received service information when the service information having the service information in the same data name as the service information to be the object of update attribute informa- tion of the received service information is stored, and the flag indicating presence or absence of update of the corresponding received service information shows presence of update, and
processing the information for deleting the service information having the same data name as the service information to be the object of update attribute information of the received service information.
